(19) **Europäisches Patentamt / European Patent Office / Office européen des brevets**

(11) **EP 4 708 062 A1**

(12) **EUROPEAN PATENT APPLICATION**
published in accordance with Art. 153(4) EPC

(43) Date of publication:
**11.03.2026 Bulletin 2026/11**

(21) Application number: **24814118.6**

(22) Date of filing: **07.05.2024**

(51) International Patent Classification (IPC):
*G06F 16/176* (2019.01)

(52) Cooperative Patent Classification (CPC):
**G06F 16/176; G06F 16/182; G06F 16/23; G06F 16/27**

(86) International application number:
**PCT/CN2024/091400**

(87) International publication number:
**WO 2024/244913 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.05.2023 CN 202310626935**

(71) Applicant: **Huawei Technologies Co., Ltd.**
**Shenzhen, Guangdong 518129 (CN)**

(72) Inventors:
• **ZHOU, Pengpeng**
  **Shenzhen, Guangdong 518129 (CN)**
• **WANG, Qiaoling**
  **Shenzhen, Guangdong 518129 (CN)**
• **LUO, Xianqiang**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **RANGE LOCK ACQUISITION METHOD, APPARATUS AND SYSTEM AND COMPUTER READABLE STORAGE MEDIUM**

(57)  This application discloses a method, an apparatus, and a system for obtaining a range lock, and a computer-readable storage medium, and relates to the field of computer technologies. The method includes: A first device obtains a first packet sent by a second device, where the first packet is for requesting to obtain a first range lock, the first packet includes a type and an interval that are of the first range lock, and the first range lock is used to lock data stored in a distributed manner; then, obtains a second range lock corresponding to the type of the first range lock, to determine whether the interval of the first range lock intersects an interval of the second range lock; and sends a second packet to the second device based on a case in which the interval of the first range lock does not intersect the interval of the second range lock, where the second packet indicates the second device to obtain the first range lock. In the method, after the packet for requesting the range lock is obtained, the range lock corresponding to the type is directly obtained, to determine whether the intervals intersect, and there is no need to traverse a fixed range lock in all obtained range locks, so that efficiency of obtaining the range lock is high.

FIG. 7

## Description

This application claims priority to Chinese Patent Application No. 202310626935.X, filed on May 30, 2023 and entitled "METHOD, APPARATUS, AND SYSTEM FOR OBTAINING RANGE LOCK, AND COMPUTER-READABLE STORAGE MEDIUM", which is incorporated herein by reference in its entirety.

## TECHNICAL FIELD

This application relates to the field of computer technologies, and in particular, to a method, an apparatus, and a system for obtaining a range lock, and a computer-readable storage medium.

## BACKGROUND

In a distributed system, a plurality of clients perform concurrent read-write access on a same file. To ensure consistency in the file, a lock corresponding to an operation is usually obtained before the operation is performed on data in the file, the lock is used to lock the data in the file, and the operation is then performed on the locked data. To improve efficiency of obtaining the lock, improve efficiency of locking the data, and adapt to a scenario of a large quantity of concurrent read-write access, a range lock is developed as a lock type that has a flexible length and can lock the data in the file based on an interval.

In a related technology, a red-black tree (red-black tree, RBTree) is used to manage the range lock. Each node of the red-black tree represents one range lock, and obtained range locks are associated together by using a structure of the red-black tree. When a new range lock needs to be obtained, traversal starts from a root node of the red-black tree, to check whether the new range lock that needs to be obtained conflicts with the obtained range locks. The new range lock is obtained when no conflict exists.

However, when the new range lock is obtained, the structure of the red-black tree needs to be traversed. Therefore, as a quantity of obtained range locks continuously increases, time needed for traversing the structure of the red-black tree continuously increases, resulting in low efficiency of obtaining the range lock.

## SUMMARY

This application provides a method, an apparatus, and a system for obtaining a range lock, and a computer-readable storage medium, to improve efficiency of obtaining a range lock.

According to a first aspect, a method for obtaining a range lock is provided. The method includes: A first device obtains a first packet sent by a second device, where the first packet is for requesting to obtain a first range lock, the first packet includes a type and an interval that are of the first range lock, and the first range lock is used to lock data stored in a distributed manner. Then, the first device obtains a second range lock corresponding to the type of the first range lock, to determine whether the interval of the first range lock intersects an interval of the second range lock. The first device sends a second packet to the second device based on a case in which the interval of the first range lock does not intersect the interval of the second range lock, where the second packet indicates the second device to obtain the first range lock.

In the method, after obtaining the packet for requesting the range lock, the first device directly obtains the range lock corresponding to the type of the range lock, to determine whether the intervals intersect, and does not need to traverse a fixed range lock in all obtained range locks, so that efficiency of obtaining the range lock is obtained.

In a possible implementation, the interval of the first range lock includes a first endpoint and a second endpoint, and the first endpoint, the second endpoint, and endpoints included in the interval of the second range lock are represented by using values. In this case, the determining whether the interval of the first range lock intersects an interval of the second range lock includes: obtaining a first neighboring point and a second neighboring point of the first endpoint from the endpoints included in the interval of the second range lock, where the first neighboring point is an endpoint with a largest value in at least one first reference endpoint, a value of the first reference endpoint is less than the value of the first endpoint, the second neighboring point is an endpoint with a smallest value in at least one second reference endpoint, and a value of the second reference endpoint is greater than the value of the first endpoint; and determining, based on the first neighboring point, the second neighboring point, and the second endpoint, whether the interval of the first range lock intersects the interval of the second range lock.

In other words, the first neighboring point and the second neighboring point are endpoints respectively located on two sides of the first endpoint in the endpoints included in the interval of the second range lock. Therefore, when whether the interval of the first range lock intersects the interval of the second range lock is determined based on the first neighboring point, the second neighboring point, and the second endpoint, whether the interval of the first range lock intersects the interval of the second range lock may be determined based on the second range lock at which the first neighboring point is located, the second range lock at which the second neighboring point is located, and whether there is the second range lock whose interval includes the interval of the first range lock. A quantity of second range locks used to determine whether the intervals intersect is small, and determining efficiency is high, so that efficiency of obtaining the range lock is improved.

In a possible implementation, there are a plurality of second range locks, and the determining, based on the first neighboring point, the second neighboring point, and the second endpoint, whether the interval of the first range lock intersects the interval of the second range lock includes: when the value of the second endpoint is greater than the value of the first endpoint, based on a case in which the first neighboring point is a fourth endpoint included in an interval of a second range lock, the second neighboring point is a fifth endpoint included in an interval of another second range lock, the value of the second endpoint is less than the value of the second neighboring point, and the interval of the first range lock is not included in an interval of any one of the plurality of second range locks, determining that the interval of the first range lock does not intersect intervals of the plurality of second range locks, where

the interval including the fourth endpoint further includes a third endpoint, a value of the third endpoint is less than a value of the fourth endpoint, the interval including the fifth endpoint further includes a sixth endpoint, and a value of the fifth endpoint is less than a value of the sixth endpoint. In other words, the method is applicable to a case in which the first endpoint is an endpoint on a left side of the endpoints included in the interval of the first range lock, and the second endpoint is an endpoint on a right side of the endpoints included in the interval of the first range lock.

In a possible implementation, there are a plurality of second range locks, and the determining, based on the first neighboring point, the second neighboring point, and the second endpoint, whether the interval of the first range lock intersects the interval of the second range lock includes: when the value of the second endpoint is less than the value of the first endpoint, based on a case in which the first neighboring point is a fourth endpoint included in an interval of a second range lock, the second neighboring point is a fifth endpoint included in an interval of another second range lock, the value of the second endpoint is greater than the value of the first neighboring point, and the interval of the first range lock is not included in an interval of any one of the plurality of second range locks, determining that the interval of the first range lock does not intersect intervals of the plurality of second range locks, where

the interval including the fourth endpoint further includes a third endpoint, a value of the third endpoint is less than a value of the fourth endpoint, the interval including the fifth endpoint further includes a sixth endpoint, and a value of the fifth endpoint is less than a value of the sixth endpoint. In other words, the method is applicable to a case in which the first endpoint is an endpoint on a right side of the endpoints included in the interval of the first range lock, and the second endpoint is an endpoint on a left side of the endpoints included in the interval of the first range lock. Relative positions of the first endpoint and the second endpoint are flexible.

In a possible implementation, the first device stores a multi-level search structure corresponding to the type, and the endpoints included in the interval of the second range lock are stored in the multi-level search structure. The obtaining a first neighboring point and a second neighboring point of the first endpoint from the endpoints included in the interval of the second range lock includes: searching the multi-level search structure, to obtain the first neighboring point and the second neighboring point of the first endpoint.

In the method, when the endpoints in the interval of the second range lock are included in the multi-level search structure corresponding to the type, a case of values of a plurality of bit positions at a lower layer can be quickly determined based on a value of a bit position at an upper layer in the multi-level search structure, so that a range of bit positions of the first neighboring point and the second neighboring point of the first endpoint can be quickly narrowed down, and efficiency of searching for the first neighboring point and the second neighboring point of the first endpoint based on the multi-level search structure is high.

In a possible implementation, after the sending a second packet to the second device, the method further includes: The first device adds the first endpoint and the second endpoint to the multi-level search structure. In the method, the endpoints of the first range lock can be added to the multi-level search structure. Therefore, subsequently, the endpoints of the first range lock can be used to determine whether the range lock can be obtained.

In a possible implementation, after the adding the first endpoint and the second endpoint to the multi-level search structure, the method further includes: The first device obtains a third packet sent by the second device, where the third packet is for requesting to release the first range lock, and the third packet includes the type of the first range lock, the first endpoint, and the second endpoint. The first device obtains the multi-level search structure corresponding to the type. The first device deletes the first endpoint and the second endpoint from the multi-level search structure. When the first range lock is released, in the method, the endpoints of the first range lock can be deleted from the multi-level search structure, so that a case of the endpoints included in the multi-level search structure is consistent with a case of those in the second range lock corresponding to the type.

In a possible implementation, based on a case in which the first range lock is a range lock whose interval allows intersection, the second range lock includes a range lock whose interval does not allow intersection and that is already obtained before the first range lock; or based on a case in which the first range lock is a range lock whose interval does not allow intersection, the second range lock includes all range locks that are already obtained before the first range lock. The method is applicable to different types of first range locks, and therefore has a wide application scope.

In a possible implementation, the first device is any one of a switch, a server, a device including a field-programmable gate array (field-programmable gate array, FPGA), a device including a smart network interface card (smart network interface card, Smart NIC), or a device including a data processing unit (data processing unit, DPU), and the second device is a client. The method is applicable to a case in which a plurality of types of devices are used as the first device, and has a wide range of use. Further, when the first device is the any one of the switch, the device including the FPGA, the device including the smart network interface card, or the device including the DPU, regardless of a specific quantity of packets that are for requesting range locks and that are received by the first device, time for the first device to process these packets is basically the same. Therefore, in a scenario of a large quantity of concurrent read-write operations, duration for performing the method by the first device is stable. When the duration for performing the method is short, a delay of obtaining the range lock is short, and efficiency is high.

According to a second aspect, a method for obtaining a range lock is provided. The method includes: A second device sends a first packet to a first device, where the first packet is for requesting to obtain a first range lock, the first packet includes a type and an interval that are of the first range lock, and the first range lock is used to lock data stored in a distributed manner. The second device receives a second packet sent by the first device, and obtains the first range lock based on the second packet, where the second packet is sent by the first device based on a case in which the interval of the first range lock does not intersect an interval of a second range lock corresponding to the type.

In the method, after obtaining the packet for requesting the range lock, the first device directly obtains the range lock corresponding to the type of the range lock, to determine whether the intervals intersect, and does not need to traverse a fixed range lock in all the obtained range locks, so that efficiency of determining whether the intervals intersect is high. In this case, time from sending the first packet to receiving the second packet by the second device is short, and efficiency of obtaining the range lock is high.

In a possible implementation, after the obtaining the first range lock, the method further includes: The second device sends a third packet to the first device, where the third packet is for requesting to release the first range lock, and the third packet includes the type and the interval that are of the first range lock. The second device may request to release the first range lock. Therefore, after the first range lock is released, the first range lock can be obtained again by another device, so that an operation is performed on the data stored in the distributed manner based on the first range lock.

In a possible implementation, based on a case in which the first range lock is a range lock whose interval allows intersection, the second range lock includes a range lock whose interval does not allow intersection and that is already obtained before the first range lock;

or based on a case in which the first range lock is a range lock whose interval does not allow intersection, the second range lock includes all range locks that are already obtained before the first range lock. The method is applicable to different types of first range locks, and therefore has a wide application scope.

In a possible implementation, the first device is any one of a switch, a server, a device including an FPGA, a device including a smart network interface card, or a device including a DPU, and the second device is a client. The method is applicable to a case in which a plurality of types of devices are used as the first device, and has a wide range of use. Further, when the first device is the any one of the switch, the device including the FPGA, the device including the smart network interface card, or the device including the DPU, regardless of a specific quantity of packets that are for requesting range locks and that are received by the first device, time for the first device to process these packets is basically the same. Therefore, in a scenario of a large quantity of concurrent read-write operations, duration for performing the method by the first device is stable. When the duration for performing the method is short, a delay of obtaining the range lock is short, and efficiency is high.

According to a third aspect, an apparatus for obtaining a range lock is provided. The apparatus is used in a first device, and the apparatus includes:

a first obtaining module, configured to obtain a first packet sent by a second device, where the first packet is for requesting to obtain a first range lock, the first packet includes a type and an interval that are of the first range lock, and the first range lock is used to lock data stored in a distributed manner;
a second obtaining module, configured to obtain a second range lock corresponding to the type of the first range lock;
a determining module, configured to determine whether the interval of the first range lock intersects an interval of the second range lock; and
a sending module, configured to send a second packet to the second device based on a case in which the interval of the first range lock does not intersect the interval of the second range lock, where the second packet indicates the second device to obtain the first range lock.

In a possible implementation, the interval of the first range lock includes a first endpoint and a second endpoint, and the first endpoint, the second endpoint, and endpoints included in the interval of the second range lock are represented by using values. The determining module is configured to: obtain a first neighboring point and a second neighboring point of the first endpoint from the endpoints included in the interval of the second range lock, where the first neighboring point is an endpoint with a largest value in at least one first reference endpoint, a value of the first reference endpoint is less than the value of the first endpoint, the second neighboring point is an endpoint with a smallest value in at least one second reference endpoint, and a value of the second reference endpoint is greater than the value of the first endpoint; and determine, based on the first neighboring point, the second neighboring point, and the second endpoint, whether the interval of the first range lock intersects the interval of the second range lock.

In a possible implementation, there are a plurality of second range locks. When the value of the second endpoint is greater than the value of the first endpoint, based on a case in which the first neighboring point is a fourth endpoint included in an interval of a second range lock, the second neighboring point is a fifth endpoint included in an interval of another second range lock, the value of the second endpoint is less than the value of the second neighboring point, and the interval of the first range lock is not included in an interval of any one of the plurality of second range locks, the determining module is configured to determine that the interval of the first range lock does not intersect intervals of the plurality of second range locks, where the interval including the fourth endpoint further includes a third endpoint, a value of the third endpoint is less than a value of the fourth endpoint, the interval including the fifth endpoint further includes a sixth endpoint, and a value of the fifth endpoint is less than a value of the sixth endpoint.

In a possible implementation, there are a plurality of second range locks. When the value of the second endpoint is less than the value of the first endpoint, based on a case in which the first neighboring point is a fourth endpoint included in an interval of a second range lock, the second neighboring point is a fifth endpoint included in an interval of another second range lock, the value of the second endpoint is greater than the value of the first neighboring point, and the interval of the first range lock is not included in an interval of any one of the plurality of second range locks, the determining module is configured to determine that the interval of the first range lock does not intersect intervals of the plurality of second range locks, where the interval including the fourth endpoint further includes a third endpoint, a value of the third endpoint is less than a value of the fourth endpoint, the interval including the fifth endpoint further includes a sixth endpoint, and a value of the fifth endpoint is less than a value of the sixth endpoint.

In a possible implementation, the first device stores a multi-level search structure corresponding to the type, and the endpoints included in the interval of the second range lock are stored in the multi-level search structure. The determining module is configured to search the multi-level search structure, to obtain the first neighboring point and the second neighboring point of the first endpoint.

In a possible implementation, the determining module is further configured to add the first endpoint and the second endpoint to the multi-level search structure.

In a possible implementation, the first obtaining module is further configured to obtain a third packet sent by the second device, where the third packet is for requesting to release the first range lock, and the third packet includes the type of the first range lock, the first endpoint, and the second endpoint. The determining module is further configured to: obtain the multi-level search structure corresponding to the type; and delete the first endpoint and the second endpoint from the multi-level search structure.

In a possible implementation, based on a case in which the first range lock is a range lock whose interval allows intersection, the second range lock includes a range lock whose interval does not allow intersection and that is already obtained before the first range lock; or based on a case in which the first range lock is a range lock whose interval does not allow intersection, the second range lock includes all range locks that are already obtained before the first range lock.

In a possible implementation, the first device is any one of a switch, a server, a device including an FPGA, a device including a smart network interface card, or a device including a DPU, and the second device is a client.

According to a fourth aspect, an apparatus for obtaining a range lock is provided. The apparatus is used in a second device, and the apparatus includes:

a sending module, configured to send a first packet to a first device, where the first packet is for requesting to obtain a first range lock, the first packet includes a type and an interval that are of the first range lock, and the first range lock is used to lock data stored in a distributed manner;
a first obtaining module, configured to receive a second packet sent by the first device, where the second packet is sent by the first device based on a case in which the interval of the first range lock does not intersect an interval of a second range lock corresponding to the type; and
a second obtaining module, configured to obtain the first range lock based on the second packet.

In a possible implementation, the sending module is further configured to send a third packet to the first device, where the third packet is for requesting to release the first range lock, and the third packet includes the type and the interval that are of the first range lock.

In a possible implementation, based on a case in which the first range lock is a range lock whose interval allows intersection, the second range lock includes a range lock whose interval does not allow intersection and that is already obtained before the first range lock; or based on a case in which the first range lock is a range lock whose interval does not allow intersection, the second range lock includes all range locks that are already obtained before the first range lock.

In a possible implementation, the first device is any one of a switch, a server, a device including an FPGA, a device including a smart network interface card, or a device including a DPU, and the second device is a client.

According to a fifth aspect, a system for obtaining a range lock is provided. The system includes a first device and a second device. The first device is configured to perform any method for obtaining a range lock in the first aspect, and the second device is configured to perform any method for obtaining a range lock in the second aspect.

According to a sixth aspect, a computer system is provided. The computer system includes a processor. When the processor executes program instructions or code, the computer system implements any method for obtaining a range lock in the first aspect or any method for obtaining a range lock in the second aspect. For example, the computer system further includes a memory, and the memory is configured to store the program instructions or the code.

According to a seventh aspect, a computer-readable storage medium is provided. The computer-readable storage medium stores at least one program instruction or code. When the program instruction or the code is loaded and executed by a processor, a computer is enabled to implement any method for obtaining a range lock in the first aspect or any method for obtaining a range lock in the second aspect.

According to an eighth aspect, a communication apparatus is provided. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. In addition, when the processor executes the instructions stored in the memory, the processor is enabled to perform any method for obtaining a range lock in the first aspect or any method for obtaining a range lock in the second aspect.

For example, there are one or more processors, and there are one or more memories.

For example, the memory and the processor may be integrated together, or the memory and the processor are disposed separately.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

According to a ninth aspect, a computer program or a computer program product is provided. The computer program or the computer program product includes computer program code. When the computer program code is run by a computer, the computer is enabled to perform any method for obtaining a range lock in the first aspect or any method for obtaining a range lock in the second aspect.

According to a tenth aspect, a chip is provided, including: a processor, configured to: invoke, from a memory, instructions stored in the memory and run the instructions. When the chip is installed on a first device, the first device performs any method for obtaining a range lock in the first aspect. When the chip is installed on a second device, the second device performs any method for obtaining a range lock in the second aspect.

For example, the chip further includes an input interface, an output interface, and the memory. The input interface, the output interface, the processor, and the memory are connected to each other through an internal connection path.

It should be understood that, for beneficial effects achieved by the technical solutions of the third aspect to the tenth aspect in this application and corresponding possible implementations, refer to technical effects of the first aspect, the second aspect, and the corresponding possible implementations of the first aspect and the second aspect. Details are not described herein again.

**BRIEF DESCRIPTION OF DRAWINGS**

FIG. 1 is a diagram in which a plurality of clients initiate write requests to a file stored in a distributed manner according to an embodiment of this application;
FIG. 2 is a diagram of a structure of a red-black tree;
FIG. 3 is a diagram of a structure of a network lock system;
FIG. 4 is a diagram of an implementation environment of a method for obtaining a range lock according to an embodiment of this application;
FIG. 5 is a diagram of an implementation environment of another method for obtaining a range lock according to an embodiment of this application;
FIG. 6 is a diagram of an implementation environment of still another method for obtaining a range lock according to an embodiment of this application;
FIG. 7 is a flowchart of a method for obtaining a range lock according to an embodiment of this application;
FIG. 8 is a diagram of a structure of a first packet according to an embodiment of this application;
FIG. 9 is a diagram of a process of obtaining a range lock according to an embodiment of this application;
FIG. 10 is a diagram of arranging endpoints according to an embodiment of this application;
FIG. 11 is a diagram of a bitmap structure according to an embodiment of this application;
FIG. 12 is a diagram of positions of a first endpoint, a second endpoint, a first neighboring point, and a second neighboring point according to an embodiment of this application;
FIG. 13 is a diagram of another process of obtaining a range lock according to an embodiment of this application;

FIG. 14 is a diagram of a structure of an apparatus for obtaining a range lock according to an embodiment of this application;

FIG. 15 is a diagram of a structure of another apparatus for obtaining a range lock according to an embodiment of this application;

FIG. 16 is a diagram of a structure of a computer system according to an embodiment of this application; and

FIG. 17 is a diagram of a structure of another computer system according to an embodiment of this application.

## DESCRIPTION OF EMBODIMENTS

Terms used in implementations of this application are merely used to explain embodiments of this application, but are not intended to limit this application. The following describes embodiments of this application with reference to the accompanying drawings.

In a distributed system, there is a case in which a plurality of clients simultaneously initiate read access and/or write access to a same file or a same database stored in a distributed manner. The read access is also referred to as a read operation, the write access is also referred to as a write operation, the read operation is used to read data in the file, and the write operation is used to modify the data in the file. The read operation and the write operation are collectively referred to as a read-write operation. A read-write operation simultaneously initiated on a same file or a same database is referred to as a concurrent read-write operation. A large quantity of concurrent read-write operations exist in the distributed system. These concurrent read-write operations may cause data inconsistency when same data in the same file or database is read or modified.

For example, a file 1 stored in a distributed manner is simultaneously stored in a storage device 1, a storage device 2, and a storage device 3 of the distributed system. When a client 1 and a client 2 in the distributed system simultaneously initiate write operations on the file 1, if the write operation initiated by the client 1 is performed on the file 1 stored in the storage device 1, the write operation initiated by the client 2 is performed on the file 1 stored in the storage device 2, content written through the write operation initiated by the client 1 is different from content written through the write operation initiated by the client 2, and files 1 stored in the storage device 1, the storage device 2, and the storage device 3 are inconsistent.

To ensure data consistency, a distributed lock emerges. When the read operation or the write operation needs to be performed on the data stored in the distributed manner, a distributed lock corresponding to the read operation or the write operation is obtained. Then, the distributed lock is used to lock the data, so that this object is not modified by another write operation, and the read operation or the write operation is then performed, thereby ensuring the data consistency. In embodiments of this application, the data includes but is not limited to a file, a block in a case in which the file is stored in a block form, a table in the database, or a record in the table.

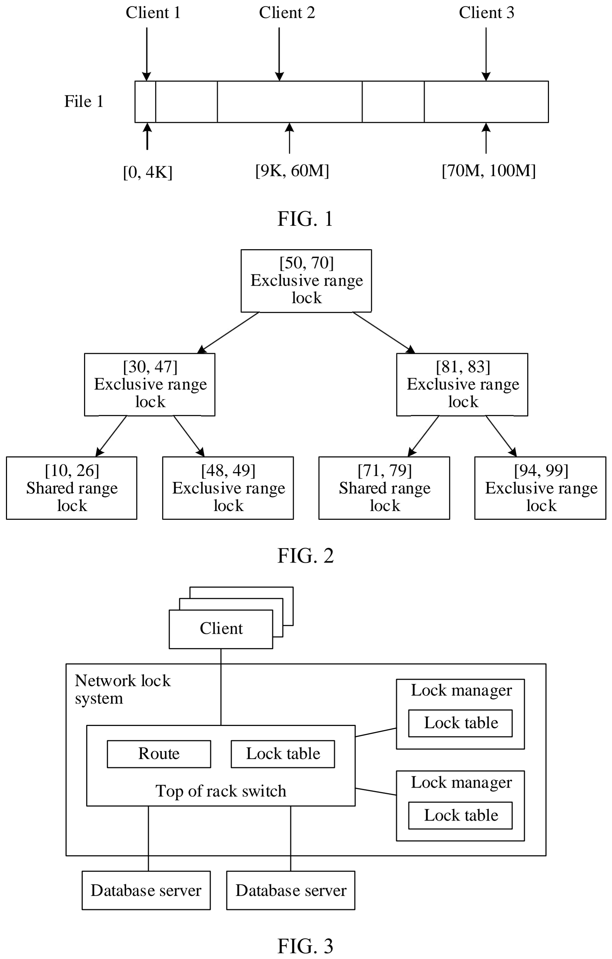

In a plurality of types of distributed locks, a length of a range lock is flexible and data in an interval can be locked, so that efficiency of locking the data in the interval by using the range lock is high. FIG. 1 is a diagram in which a plurality of clients initiate write requests to a file stored in the distributed manner according to an embodiment of this application. Refer to FIG. 1. A client (client) 1 initiates a write operation performed on data of 0 to 4 kilobytes (kilobytes, KB) in a file 1, where 0 to 4 KB is represented as [0, 4K]; a client 2 initiates a write operation performed on data of 9 KB to 60 megabytes (megabytes, MB) in the file 1, where 9 KB to 60 MB is represented as [9K, 60M]; and a client 3 initiates a write operation performed on data of 70 MB to 100 MB in the file 1, where 70 MB to 100 MB is represented as [70M, 100M].

An interval that is of a range lock 1 and that is obtained by the client 1 may be [0, 1], an interval that is of a range lock 2 and that is obtained by the client 2 may be [2, 15K], and an interval that is of a range lock 3 and that is obtained by the client 3 may be [16K, 25K]. Granularities of the range lock 1, the range lock 2, and the range lock 3 are all 4 KB. A granularity of a range lock refers to an amount of data to be locked by using one value in an interval of the range lock. When the granularity of the range lock is 4 KB, one value in the interval of the range lock is used to lock 4 KB data. Therefore, the range lock 1 can be used to lock the data of [0, 4K], the range lock 2 can be used to lock the data of [9K, 60M], and the range lock 3 can be used to lock the data of [70M, 100M].

In a related technology, a red-black tree is used to manage range locks, each node of the red-black tree represents one range lock, and a plurality of obtained range locks are associated together by using a structure of the red-black tree. FIG. 2 is a diagram of a structure of a red-black tree. As shown in FIG. 2, each node of the red-black tree further includes a type of a range lock. When a new range lock needs to be obtained, traversal starts from a root node of the red-black tree, to check whether the new range lock that needs to be obtained conflicts with obtained range locks. The new range lock is obtained when no conflict exists.

Refer to FIG. 2. When the new range lock needs to be obtained, the traversal starts from a range lock [50, 70]. If a type of the new range lock is a shared range lock, when no intersection exists between an interval of the range lock and intervals of all exclusive range locks in the red-black tree, the range lock does not conflict with the obtained range locks; or when an intersection exists between an interval of the range lock and an interval of any one exclusive range lock in the red-black tree, the range lock conflicts with the obtained range locks. If a type of the new range lock is an exclusive range lock, when no intersection exists between an interval of the range lock and intervals of all exclusive range locks and intervals of all shared range locks in the red-black tree, the range lock does not conflict with the obtained range locks; or when an intersection exists between the range lock and an interval of any one exclusive range lock or an interval of any one shared range lock in the red-black tree, the range lock conflicts with the obtained range locks.

However, when the new range lock is obtained, the red-black tree needs to be traversed from the root node. Therefore, as a quantity of obtained range locks continuously increases, time for traversing the red-black tree continuously increases, resulting in low efficiency of obtaining the new range lock. In addition, in a related technology, the red-black tree is traversed by using a central processing unit (central processing unit, CPU). As concurrent read-write operations increase, load of the CPU increases rapidly, resulting in a rapid increase in a delay of obtaining the range lock. In addition, because a structure of the red-black tree is complex, it is difficult to improve efficiency of obtaining the range lock in a manner of offloading the structure of the red-black tree to hardware.

In another related technology, a network lock system (netlock) is used to manage the range lock. FIG. 3 is a diagram of a structure of a network lock system. Refer to FIG. 3. Both a top of rack switch (top of rack switch, TOR switch) and a lock manager store a lock table (lock table). The lock table stores a correspondence between an object and a lock. For an object, a lock corresponding to the object can be obtained by searching a lock table. The top of rack switch further stores routing information. The top of rack switch is in communication connection with a plurality of lock managers and a plurality of database servers (database servers). The object may be a file, a block in a case of storing a file in a block form, a table in a database, or a record in the table.

A request packet sent by a client is forwarded to the lock manager by using the top of rack switch, and the request packet is used to obtain a lock corresponding to an object. The top of rack switch can parse content of the request packet. When the lock table of the top of rack switch includes a correspondence between the object and the lock, the top of rack switch intercepts the request packet, and sends a response packet to the client, where the response packet indicates that the lock is successfully obtained. However, the lock table in the network lock system stores the correspondence between the object and the lock by object. For a plurality of objects, the client needs to send a plurality of requests to obtain locks corresponding to the plurality of objects, resulting in low efficiency of obtaining the locks.

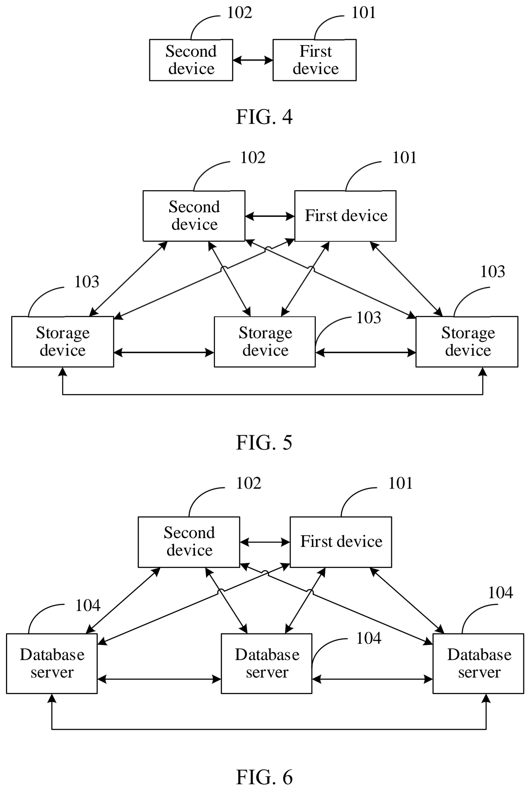

An embodiment of this application provides a method for obtaining a range lock, to improve efficiency of obtaining a range lock. The method may be applied to an implementation environment shown in FIG. 4. Refer to FIG. 4. The implementation scenario includes a distributed system, the distributed system includes a first device 101 and a second device 102, and the first device 101 and the second device 102 are in communication connection with each other. The first device 101 and the second device 102 may be in communication connection with each other through a wired or wireless network. This is not limited in this embodiment of this application. For example, the first device 101 is any one of a switch (switch), a server, a device including an FPGA, a device including a smart network interface card, or a device including a DPU, and the second device 102 is a client.

For example, the first device 101 obtains a first packet sent by the second device 102, where the first packet is for requesting to obtain a first range lock, the first packet includes a type and an interval that are of the first range lock, and the first range lock is used to lock data stored in a distributed manner; next, the first device 101 obtains a second range lock corresponding to the type of the first range lock; then, the first device 101 determines whether the interval of the first range lock intersects an interval of the second range lock; and the first device 101 sends a second packet to the second device 102 based on a case in which the interval of the first range lock does not intersect the interval of the second range lock, where the second packet indicates the second device 102 to obtain the first range lock.

Then, the first device 101 may obtain the first range lock, and use the first range lock to lock the data stored in the distributed manner. The second device 102 obtains the first range lock based on the second packet, and then the second device 102 may perform an operation on the data based on the first range lock.

Types of range locks include a range lock whose interval allows intersection and a range lock whose interval does not allow intersection. The range lock whose interval allows intersection is also referred to as a shared range lock, and the range lock whose interval does not allow intersection is also referred to as an exclusive range lock. An interval of the shared range lock can be occupied by at least one range lock, and an interval of the exclusive range lock can be occupied by only one range lock. The shared range lock corresponds to a read operation. When a shared range lock is used to lock data, the data corresponding to an interval of the shared range lock can be further locked by another shared range lock, and cannot be locked by an exclusive range lock. The exclusive range lock corresponds to a write operation. When an exclusive range lock is used to lock data, the data corresponding to an interval of the exclusive range lock cannot be locked by another exclusive range lock, and cannot be locked by the another shared range lock either. For example, the first range lock is a range lock whose interval allows intersection. That is, the first range lock is a shared range lock, and the second device 102 performs the read operation on the data. For another example, the first range lock is a range lock whose interval does not allow intersection. That is, the first range lock is an exclusive range lock, and the second device 102 performs the write operation on the data.

The distributed system shown in FIG. 4 may be a distributed file system. For example, an implementation environment of the method is shown in FIG. 5. Refer to FIG. 5. The implementation environment further includes a plurality of storage devices 103. The plurality of storage devices 103 are in communication connection with each other, and the plurality of storage devices 103 are configured to store a file. That is, in the implementation environment shown in FIG. 5, data stored in a distributed manner includes a file stored in the distributed manner. The distributed system shown in FIG. 4 may alternatively be a distributed database. For example, an implementation environment of the method is shown in FIG. 6. Refer to FIG. 6. The implementation environment further includes a plurality of database servers 104. The plurality of database servers 104 are in communication connection with each other, and the plurality of database servers 104 are configured to store a table. That is, in the implementation environment shown in FIG. 6, data stored in a distributed manner includes the table stored in the distributed manner.

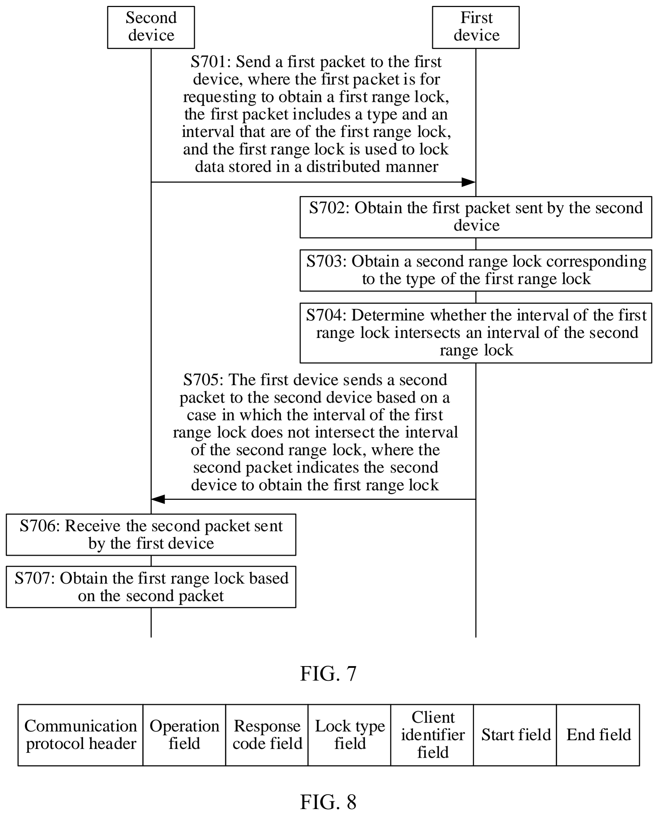

A method for obtaining a range lock provided in an embodiment of this application may be shown in FIG. 7. The following describes the method with reference to the implementation scenario shown in FIG. 4. As shown in FIG. 7, the method includes but is not limited to S701 to S707.

S701: A second device sends a first packet to a first device, where the first packet is for requesting to obtain a first range lock, the first packet includes a type and an interval that are of the first range lock, and the first range lock is used to lock data stored in a distributed manner.

For example, the first device is any one of a switch, a server, a device including an FPGA, a device including a smart network interface card, or a device including a DPU, and the second device is a client. In a possible implementation, when the second device needs to obtain the first range lock to perform an operation on the data stored in the distributed manner, the second device generates the first packet, and sends the first packet to the first device.

FIG. 8 is a diagram of a structure of a first packet according to an embodiment of this application. Refer to FIG. 8. The first packet includes a communication protocol header, an operation (operation, OP) field, a response code (response code, Res Code) field, a lock type (lock type) field, a client identifier (client identifier, client ID) field, a start (start) field, and an end (end) field. The communication protocol header includes type indication information, and the type indication information indicates that the first packet is a packet used to obtain or release a range lock. For example, the communication protocol header is a packet header, and the first packet is a packet using a user datagram protocol (user datagram protocol, UDP) protocol. In this case, the type indication information includes a destination port (destination port) number.

When the destination port number is a reference port number, the first packet is the packet used to obtain or release the range lock. The reference port number may be determined based on experience or an actual requirement. This is not limited in this embodiment of this application.

The operation field indicates a type of the request, and the type of the request includes but is not limited to a request for obtaining the range lock or releasing the range lock. For example, when a value of the operation field is a first value, the type of the request is a request for obtaining the range lock; or when a value of the operation field is a second value, the type of the request is a request for releasing the range lock. The first value and the second value may be determined based on an actual requirement. For example, the first value is 1, and the second value is 0.

The response code field indicates whether the request succeeds, and a value of the response code field is modified by the first device after the first device determines that the first range lock is successfully obtained or fails to be obtained. For example, when the first range lock is successfully obtained, the first device sets the value of the response code field to a third value. When the first range lock fails to be obtained, the first device sets the value of the response code field to a fourth value. The third value and the fourth value may be determined based on an actual requirement. For example, the third value is 1, and the fourth value is 0. In the first packet, the value of the response code field may be empty. The lock type field indicates a type of the first range lock, and the type of the first range lock includes but is not limited to any one of a shared range lock or an exclusive range lock. For example, when a value of the lock type field is a fifth value, the first range lock is the shared range lock; or when a value of the lock type field is a sixth value, the first range lock is the exclusive range lock. The fifth value and the sixth value may be determined based on an actual requirement. For example, the fifth value is 1, and the sixth value is 0.

The client identifier field indicates the second device, so that after determining that the first range lock is successfully obtained or fails to be obtained, the first device may determine the second device based on the client identifier field, and send a second packet to the second device. For example, the start field and the end field jointly indicate an interval of the first range lock. For example, the interval of the first range lock includes a first endpoint and a second endpoint, and both the first endpoint and the second endpoint are represented by using values. In this embodiment of this application, endpoints included in an interval are a start point and an end point of the interval, but are not points between the start point and the end point. When the value of the first endpoint is less than that of the second endpoint, the start field includes the value of the first endpoint, so that the start field indicates the first endpoint of the first range lock, and in this case, the first endpoint is also referred to as a left endpoint in the interval of the first range lock or a start point of the interval of the first range lock; and the end field includes the value of the second endpoint, so that the end field indicates the second endpoint of the first range lock, and in this case, the second endpoint is also referred to as a right endpoint in the interval of the first range lock or an end point of the interval of the first range lock.

When the value of the first endpoint is greater than that of the second endpoint, the start field includes the value of the second endpoint, so that the start field indicates the second endpoint of the first range lock, and in this case, the second endpoint is also referred to as a left endpoint in the interval of the first range lock or a start point of the interval of the first range lock; and the end field includes the value of the first endpoint, so that the end field indicates the first endpoint of the first range lock, and in this case, the second endpoint is referred to as a right endpoint in the interval of the first range lock or an end point of the interval of the first range lock. In this embodiment of this application, the interval of the first range lock corresponds to an interval of to-be-operated data. For example, the first endpoint corresponds to a start point of reference data, and the second endpoint corresponds to an end point of the reference data, so that the first range lock can be used to lock the to-be-operated data. If the to-be-operated data is data stored in the distributed manner, the to-be-operated data includes but is not limited to data in a file or data in a table stored in a database.

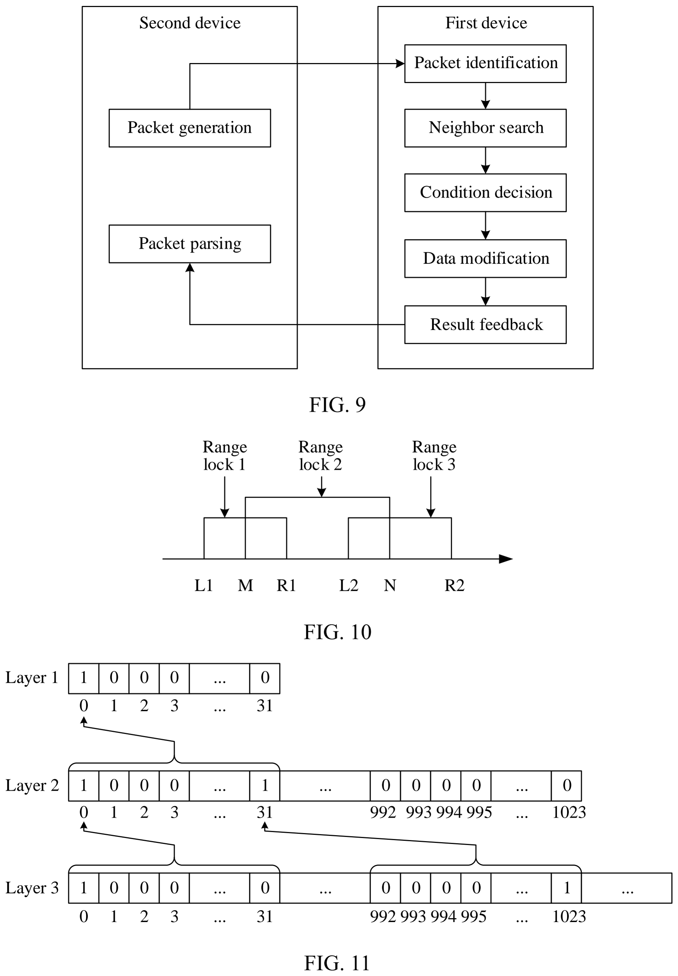

FIG. 9 is a diagram of a process of obtaining a range lock according to an embodiment of this application. An operation of generating the first packet by the second device may be an operation of generating a packet by the second device shown in FIG. 9. A manner in which the second device sends the first packet to the first device is not limited in this embodiment of this application.

S702: The first device obtains the first packet sent by the second device.

A manner in which the first device obtains the first packet sent by the second device is not limited in this embodiment of this application, provided that this manner corresponds to the manner in which the second device sends the first packet to the first device. For example, when the second device sends the first packet to the first device through a wireless network, the first device receives the first packet through the wireless network.

S703: The first device obtains a second range lock corresponding to the type of the first range lock.

In a possible implementation, after obtaining the packet, the first device identifies the packet. When the packet is the packet used to obtain or release the range lock, S703 is performed. When the packet is not the packet used to obtain or release the range lock, other processing is performed on the packet. For example, after obtaining the first packet, the first device identifies a packet header of the first packet, and performs S703 when identifying that the first packet is the packet used to obtain or release the range lock. An operation of identifying the packet may correspond to an operation of identifying the packet by the first device shown in FIG. 9.

In this embodiment of this application, the first device stores an obtained range lock, so that after obtaining the type of the first range lock, the first device can obtain the obtained range lock corresponding to the type of the first range lock. The obtained range lock corresponding to the type is the second range lock corresponding to the type. For example, based on a case in which the first range lock is a range lock whose interval allows intersection, the second range lock includes a range lock whose interval does not allow intersection and that is already obtained before the first range lock; or based on a case in which the first range lock is a range lock whose interval does not allow intersection, the second range lock includes all range locks that are already obtained before the first range lock. In other words, based on a case in which the first range lock is the shared range lock, the second range lock includes the exclusive range lock that is already obtained before the first range lock; or based on a case in which the first range lock is the exclusive range lock, the second range lock includes the exclusive range lock and the shared range lock that are already obtained before the first range lock.

In this embodiment of this application, if a quantity of obtained range locks corresponding to the type is 0, a quantity of second range locks is 0; or if a quantity of obtained range locks corresponding to the type is greater than or equal to 1, a quantity of second range locks is greater than or equal to 1.

S704: The first device determines whether the interval of the first range lock intersects an interval of the second range lock.

In a possible implementation, when the quantity of second range locks is 0, it is directly determined that the interval of the first range lock does not intersect the interval of the second range lock; or when the quantity of second range locks is greater than or equal to 1, whether the interval of the first range lock intersects an interval of at least one second range lock is determined.

For example, when the interval of the first range lock includes the first endpoint and the second endpoint, if the first range lock is the shared range lock, whether the interval of the first range lock intersects an interval of the obtained exclusive range lock is determined based on the first endpoint and the second endpoint. If the first range lock is the exclusive range lock, whether the interval of the first range lock intersects intervals of the shared range lock and the exclusive range lock that are already obtained is determined based on the first endpoint and the second endpoint.

Alternatively, when the first range lock is the exclusive range lock, whether the interval of the first range lock intersects an interval of the obtained shared range lock is determined based on the first endpoint and the second endpoint, and whether the interval of the first range lock intersects an interval of the obtained exclusive range lock is determined based on the first endpoint and the second endpoint. In this manner, an operation of determining whether the interval of the first range lock intersects the interval of the obtained shared range lock and an operation of determining whether the interval of the first range lock intersects the interval of the obtained exclusive range lock may be concurrently performed; or one of operations is first performed, and when the intervals do not intersect, another operation is then performed. This improves efficiency of determining whether the interval of the first range lock intersects the interval of the second range lock.

For example, the first endpoint, the second endpoint, and endpoints included in the interval of the second range lock are represented by using values, and whether the interval of the first range lock intersects the interval of the second range lock is determined, including S7041 and S7042.

S7041: Obtain a first neighboring point and a second neighboring point of the first endpoint from the endpoints included in the interval of the second range lock.

The first neighboring point is an endpoint with a largest value in at least one first reference endpoint, a value of the first reference endpoint is less than the value of the first endpoint, the second neighboring point is an endpoint with a smallest value in at least one second reference endpoint, and a value of the second reference endpoint is greater than the value of the first endpoint. In other words, in the at least one first reference endpoint included in the interval of the second range lock, the first neighboring point is an endpoint having a smallest distance from the first endpoint; and in the at least one second reference endpoint included in the interval of the second range lock, the second neighboring point is an endpoint having a smallest distance from the first endpoint. The first endpoint, the second endpoint, and the endpoints of the second range lock may be arranged on an axis in ascending order of values, so that the intervals of the range locks are represented as intervals on the axis.

FIG. 10 is a diagram of arranging endpoints according to an embodiment of this application. As shown in FIG. 10, intervals of a range lock 1 to a range lock 3 each includes two endpoints, and the endpoints are arranged in ascending order of values. A left endpoint in the interval of the range lock 1 is L1, a right endpoint is R1, and the interval of the range lock 1 is shown as L1 to R1. A left endpoint in the interval of the range lock 2 is M, a right endpoint is N, and the interval of the range lock 2 is shown as M to N. A left endpoint in the interval of the range lock 3 is L2, a right endpoint is R2, and the interval of the range lock 3 is shown as L2 to R2. When the range lock 2 is the first range lock, the first endpoint is the left endpoint, and the second endpoint is the right endpoint, L1 is the first neighboring point of the first endpoint, and R1 is the second neighboring point of the first endpoint. When the range lock 2 is the first range lock, the first endpoint is the right endpoint, and the second endpoint is the left endpoint, L2 is the first neighboring point of the first endpoint, and R2 is the second neighboring point of the first endpoint.

For example, when the first neighboring point of the first endpoint is first obtained, because the endpoints in the intervals of the range locks are arranged in ascending order of the values, a $1^{st}$ endpoint whose value is greater than the value of the first neighboring point in the endpoints included in the interval of the second range lock is directly used as the second neighboring point; or when the second neighboring point of the first endpoint is first obtained, a $1^{st}$ endpoint whose value is less than the value of the second neighboring point in the endpoints included in the interval of the second range lock is directly used as the first neighboring point.

In a possible implementation, the first device stores a multi-level search structure corresponding to the type, and the endpoints included in the interval of the second range lock are stored in the multi-level search structure. In this case, the obtaining a first neighboring point and a second neighboring point of the first endpoint from the endpoints included in the interval of the second range lock includes: searching the multi-level search structure corresponding to the type, to obtain the first neighboring point and the second neighboring point of the first endpoint. For example, the multi-level search structure is a bitmap (bitmap) structure. FIG. 11 is a diagram of a bitmap structure according to an embodiment of this application. FIG. 11 is described by using an example in which the bitmap structure has three layers, but a quantity of layers of the bitmap structure is not limited. The bitmap structure may include more or fewer layers.

For example, an interval of a range lock is [0, 1023]. In the bitmap structure shown in FIG. 11, 0 and 1023 are respectively a value of a left endpoint and a value of a right endpoint, 1 to 1022 are respectively values of middle points, bit values of positions 0 and 1023 are set to the first reference value, and values of positions 1 to 1022 are set to the second reference value. The first reference value and the second reference value are set based on experience or an actual requirement. This is not limited in this embodiment of this application. For example, the first reference value is 1, and the second reference value is 0.

The following uses an example in which the first reference value is 1 and the second reference value is 0 for description. Still refer to FIG. 11. At a bottom layer of the bitmap structure, in other words, at the layer 3 shown in FIG. 11, one bit position corresponds to a position of one value, and a value of the bit position indicates a case of the position of the value corresponding to the bit position. For example, at the layer 3, values of bit positions corresponding to positions whose values are 0 and 1023 are 1, and values of bit positions corresponding to other values are 0. In two adjacent layers, one bit position at an upper layer corresponds to X bit positions at a lower layer, and a value of one bit position at the upper layer indicates a case of X bit positions that are at the lower layer and that correspond to the bit position. X is a maximum bit width of data processed by a processor of the first device or any value less than the maximum bit width. For example, when the processor is a 64-bit processor, the maximum bit width is 64, and X is 64 or any value less than 64. When the processor is a 32-bit processor, the maximum bit width is 32, and X is 32 or any value less than 32.

FIG. 11 is described by using an example in which X is 32 for description. As shown in FIG. 11, one bit position at the layer 2 corresponds to 32 bit positions at the layer 3. When values of 32 bit positions at the layer 3 are all 0, a value of a bit position that is at the layer 2 and that corresponds to the 32 bit positions is 0. When values of 32 bit positions at the layer 3 are not all 0, a value of a bit position that is at the layer 2 and that corresponds to the 32 bit positions is 1. One bit position at the layer 1 corresponds to 32 bit positions at the layer 2. When values of 32 bit positions at the layer 2 are all 0, a value of a bit position that is at the layer 1 and that corresponds to the 32 bit positions is 0. When values of 32 bit positions at the layer 2 are not all 0, a value of a bit position that is at the layer 1 and that corresponds to the 32 bit positions is 1. In this case, one bit position at the layer 1 corresponds to 1024 bit positions at the layer 3.

For example, when an interval of a range lock is [0, P-1], X bit positions at the lower layer correspond to one bit position at the upper layer, and the bitmap structure needs a maximum quantity of layers

$$Q = \lceil \log_X P \rceil$$ . P is an integer greater than 1, and

$\lceil \log_X P \rceil$ represents rounding up a value of $\log_X P$ to the nearest integer. The layer 1 is a highest layer in the bitmap structure, the layer Q is a lowest layer in the bitmap structure, one bit position at the layer Q corresponds to a position of one value, and one bit position at the layer 1 corresponds to positions of $X^{Q-1}$ values.

An example in which the first neighboring point of the first endpoint is obtained by searching the multilevel search structure, and a 1st endpoint on a right side of the first neighboring point in the endpoints included in the interval of the second range lock is directly used as the second neighboring point is used for description. A process of searching for the first neighboring point of the first endpoint starts from searching the layer 1 and ends at searching the layer Q. For a layer i, a searching process includes but is not limited to S1-1 to S1-4, where i is greater than or equal to 1 and less than or equal to Q. In this embodiment of this application, a bit position at the layer i has an identifier value, one identifier value indicates one bit position at the layer i, and the identifier value may be represented by using a value. For the layer Q, because one bit position corresponds to a position of one value, an identifier value of the bit position is a value.

S1-1: Search the layer i for a largest identifier value $Y_{i\_max}$, where identifier values are less than or equal to $Y_i$ and a value is 1.

$Y_i$ represents an identifier value of a bit position corresponding to the value of the first endpoint at the layer i, where $Y_i = \lfloor \frac{Y}{X^{Q-i}} \rfloor$ , Y represents the value of the first endpoint, and $\lfloor \frac{Y}{X^{Q-i}} \rfloor$ represents rounding down $\frac{Y}{X^{Q-i}}$ to the nearest integer. When $Y_i$ is equal to $Y_{i\_max}$, S1-2 is performed. When $Y_i$ is greater than $Y_{i\_max}$ and $Y_{i\_max}$ is greater than 0, S1-3 is performed. When $Y_{i\_max}$ is less than 0, S1-4 is performed.

S1-2: If the layer i is the bottom layer, determine that the interval of the first range lock intersects the interval of the second range lock; or if the layer i is not the bottom layer, search a next layer for a largest identifier value $Y_{i+1\_max}$, where identifier values are less than or equal to $Y_{i+1}$ and a value is 1.

When the layer i is the bottom layer, namely, the layer Q, if an obtained identifier value $Y_{Q\_max}$ is equal to $Y_Q$, it indicates that the first range lock and the second range lock share one endpoint, an intersection exists between the interval of the first range lock and the interval of the second range lock, and the intersection includes at least an endpoint $Y_Q$. In this case, it is determined that the interval of the first range lock intersects the interval of the second range lock. $Y_{i+1}$ represents an identifier value of a bit position corresponding to the value of the first endpoint at a layer i+1, where $Y_{i+1} = \lfloor \frac{Y}{X^{Q-(i+1)}} \rfloor$ . For different cases of $Y_{t+1}$ and $Y_{i+1\_max}$, for subsequent execution steps, refer to subsequent execution steps in different cases of $Y_i$ and $Y_{i\_max}$. Details are not described herein again.

S1-3: If the layer i is the bottom layer, determine that $Y_{i\_max}$ is the value of the first neighboring point; or if the layer i is not the bottom layer, search a next layer for a largest identifier value $Y_{i+1\_max}$, where identifier values are less than or equal to $Y_{i+1}$ and a value is 1.

$Y_{i+1}$ represents an identifier value of a bit position corresponding to the value of the first endpoint at a layer i+1, where $Y_{i+1} = (Y_{i\_max} + 1) * X - 1$. $(Y_{i\_max} + 1) * X - 1$ represents an identifier value of a last bit position in X bit positions corresponding to $Y_{i\_max}$ at the layer i+1. For different cases of $Y_{i+1}$ and $Y_{i-1\_max}$, for subsequent execution steps, refer to subsequent execution steps in different cases of $Y_i$ and $Y_{i\_m\alpha x}$. Details are not described herein again.

With reference to the steps from S1-1 to S1-3, the found identifier value $Y_{Q\_max}$ is obtained at the layer Q. There are three possible cases for the identifier value $Y_{Q\_max}$ : (1) $Y_{Q\_max} < 0$, where in this case, it indicates that the first neighboring point does not exist; (2) $Y_{Q\_max} = Y_Q$, where in this case, it is determined that the intersection exists between the interval of the first range lock and the interval of the at least one second range lock, and the intersection includes at least the endpoint $Y_Q$; and (3) $0 \leq Y_{Q\_max} < Y_Q$, where in this case, $Y_{Q\_max}$ is determined as the identifier value of the first neighboring point.

S1-4: Return a third reference value, where the third reference value indicates that the multi-level search structure does not include the first neighboring point of the first endpoint, and in bit positions that are at the layer Q and whose values are 1, a value of a bit position with a smallest value is determined as the value of the second neighboring point. The third reference value is determined based on experience or an actual requirement. For example, the third reference value is -1. The foregoing operation of obtaining the first neighboring point and the second neighboring point of the first endpoint may correspond to a neighbor search operation performed by the first device in FIG. 9.

When the endpoints in the interval of the second range lock are included in the multi-level search structure corresponding to the type, a case of values of a plurality of bit positions at the lower layer can be quickly determined based on a value of a bit position at the upper layer in the multi-level search structure, so that a range of bit positions of the first neighboring point and the second neighboring point of the first endpoint can be quickly narrowed down, and efficiency of searching for the first neighboring point and the second neighboring point of the first endpoint based on the multi-level search structure is high.

S7042: Determine, based on the first neighboring point, the second neighboring point, and the second endpoint, whether the interval of the first range lock intersects the interval of the second range lock.

It can be learned with reference to content in S7041 that the first neighboring point and the second neighboring point are endpoints respectively located on two sides of the first endpoint in the endpoints included in the interval of the second range lock. Therefore, when whether the interval of the first range lock intersects the interval of the second range lock is determined based on the first neighboring point, the second neighboring point, and the second endpoint, whether the interval of the first range lock intersects the interval of the second range lock may be determined based on the second range lock at which the first neighboring point is located, the second range lock at which the second neighboring point is located, and whether there is the second range lock whose interval includes the interval of the first range lock. In this case, a quantity of second range locks used to determine whether the intervals intersect is small, and determining efficiency is high, so that efficiency of obtaining the range lock is improved.

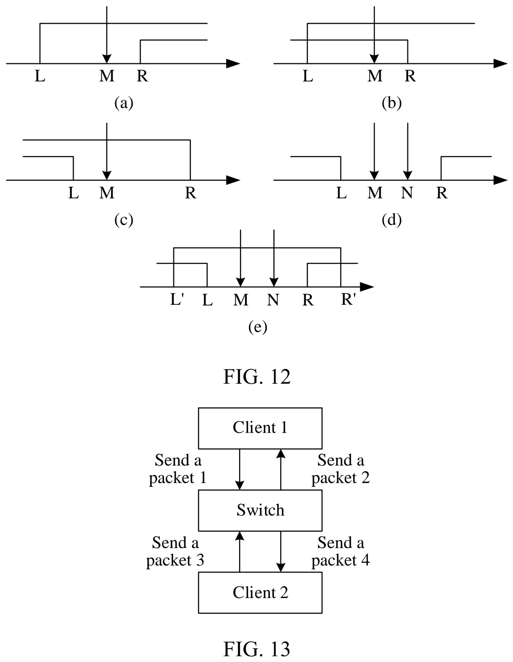

FIG. 12 is a diagram of positions of a first endpoint, a second endpoint, a first neighboring point, and a second neighboring point according to an embodiment of this application. Refer to FIG. 12. There are a plurality of second range locks, M represents the first endpoint and the first endpoint is a left endpoint, N represents the second endpoint and the second endpoint is a right endpoint, L represents the first neighboring point, and R represents the second neighboring point. As shown in (a) in FIG. 12, when both L and R are left endpoints included in an interval of the second range lock, if M is included in the interval of the second range lock in which L is located, an interval of a first range lock intersects the interval of the second range lock in which L is located. As shown in (b) in FIG. 12, when L is a left endpoint included in an interval of a second range lock, and R is a right endpoint included in an interval of another second range lock, if M is included in the interval of the second range lock in which L is located, and is also included in the interval of the second range lock in which R is located, an interval of a first range lock intersects the interval of the second range lock in which L is located, and also intersects the interval of the second range lock in which R is located.

As shown in (c) in FIG. 12, when both L and R are right endpoints included in an interval of the second range lock, if M is included in the interval of the second range lock in which R is located, an interval of a first range lock intersects the interval of the second range lock in which R is located. As shown in (d) in FIG. 12, when L is a right endpoint included in an interval of a second range lock, and R is a left endpoint included in an interval of another second range lock, if M is not included in the interval of the second range lock in which L is located, and is not included in the interval of the second range lock in which R is located, and a value of N is less than a value of R, an interval of a first range lock does not intersect the interval of the second range lock in which L is located, and does not intersect the interval of the second range lock in which R is located. Refer to (d) in FIG. 12. If the interval of the first range lock is not included in the interval of the second range lock, the interval of the first range lock does not intersect an interval of a second range lock corresponding to a type.

As shown in (e) in FIG. 12, when an endpoint L' exists on a left side of L, an endpoint R' exists on a right side of R, and L' and R' are two endpoints included in an interval of a second range lock, if the interval of the second range lock in which L' and R' are located includes the interval of the first range lock, an interval of a first range lock intersects the interval of the second range lock in which L' and R' are located. It can be learned that, a condition that the interval of the first range lock does not intersect the interval of the second range lock includes but is not limited to: L is a right endpoint included in an interval of a second range lock, R is a left endpoint included in an interval of another second range lock, a value of N is less than a value of R, and an interval of a first range lock is not completely included in the interval of any second range lock.

For example, when there is one second range lock, whether an interval of a first range lock intersects an interval of the second range lock is directly determined based on a first endpoint, a second endpoint, and values of the two endpoints of the second range lock. When there are a plurality of second range locks, whether an interval of a first range lock intersects intervals of the second range locks is determined based on different cases of the second endpoint, which includes but is not limited to the following case A and case B.

Case A: A value of the second endpoint is greater than a value of the first endpoint.

In this case, the first endpoint may be the left endpoint included in the interval of the first range lock, and the second endpoint may be the right endpoint included in the interval of the first range lock. Based on a case in which the first neighboring point is a fourth endpoint included in an interval of a second range lock, the second neighboring point is a fifth endpoint included in an interval of another second range lock, the value of the second endpoint is less than a value of the second neighboring point, and the interval of the first range lock is not included in the interval of any second range lock of the plurality of second range locks, it is determined that the interval of the first range lock does not intersect the intervals of a plurality of second range locks.

The interval including the fourth endpoint further includes a third endpoint, a value of the third endpoint is less than a value of the fourth endpoint, the interval including the fifth endpoint further includes a sixth endpoint, and a value of the fifth endpoint is less than a value of the sixth endpoint. That is, both the third endpoint and the fifth endpoint may be left endpoints included in the intervals of the second range locks, and both the fourth endpoint and the sixth endpoint may be right endpoints included in the intervals of the second range locks.

That is, if the following condition (a1) to condition (a4) cannot be met at the same time, it is determined that the interval of the first range lock intersects the intervals of the plurality of second range locks. Condition (a1): The first neighboring point is a fourth endpoint included in an interval of a second range lock. Condition (a2): The second neighboring point is a fifth endpoint included in an interval of another second range lock. Condition (a3): The value of the second endpoint is less than the value of the second neighboring point. Condition (a4): The interval of the first range lock is not included in an interval of any second range lock of the plurality of second range locks.

Case B: A value of the second endpoint is less than a value of the first endpoint.

In this case, the first endpoint may be a right endpoint in the interval of the first range lock, and the second endpoint may be a left endpoint included in the interval of the first range lock. Based on a case in which the first neighboring point is a fourth endpoint included in an interval of a second range lock, the second neighboring point is a fifth endpoint included in an interval of another second range lock, the value of the second endpoint is greater than the value of the first neighboring point, and the interval of the first range lock is not included in an interval of any one of obtained range locks corresponding to the type, it is determined that the interval of the first range lock does not intersect intervals of the plurality of second range locks.

The interval including the fourth endpoint further includes a third endpoint, a value of the third endpoint is less than a value of the fourth endpoint, the interval including the fifth endpoint further includes a sixth endpoint, and a value of the fifth endpoint is less than a value of the sixth endpoint. That is, both the third endpoint and the fifth endpoint may be left endpoints included in the intervals of the second range locks, and both the fourth endpoint and the sixth endpoint may be right endpoints included in the intervals of the second range locks.

That is, if the following condition (b1) to condition (b4) cannot be met at the same time, it is determined that the interval of the first range lock intersects the intervals of the plurality of second range locks. Condition (b1): The first neighboring point is a fourth endpoint included in an interval of a second range lock. Condition (b2): The second neighboring point is a fifth endpoint included in an interval of another second range lock. Condition (b3): The value of the second endpoint is greater than the value of the first neighboring point. Condition (b4): The interval of the first range lock is not included in an interval of any second range lock of the plurality of second range locks.

In the method provided in this embodiment of this application, because the second range lock whose interval does not include the first neighboring point and does not include the interval of the first range lock and the second range lock whose interval does not include the second neighboring point and does not include the interval of the first range lock do not intersect the interval of the first range lock, when it is determined whether the interval of the first range lock intersects the intervals of the plurality of second range locks, it is directly determined that the intervals of the two second range locks do not intersect the interval of the first range lock, so that efficiency of determining whether the interval of the first range lock intersects the intervals of the plurality of second range locks is high, and efficiency of obtaining the first range lock is high. The foregoing process of determining whether the interval of the first range lock intersects the interval of the second range lock may correspond to a condition decision operation performed by the first device in FIG. 9.

S705: The first device sends the second packet to the second device based on a case in which the interval of the first range lock does not intersect the interval of the second range lock, where the second packet indicates the second device to obtain the first range lock.

In this embodiment of this application, a structure of the second packet is the same as a structure of the first packet. When the interval of the first range lock does not intersect the interval of the second range lock, the first device may obtain the second packet by modifying the value of the response code field of the first packet. For example, the first device modifies the value of the response code field of the first packet to the third value, to obtain the second packet. Therefore, after obtaining the second packet, the second device may obtain the first range lock based on the third value as the value of the response code field.

For example, based on a case in which the interval of the first range lock intersects the interval of the second range lock, the first device sends a reject packet to the second device, where the reject packet indicates the second device not to obtain the first range lock. A structure of the reject packet is the same as the structure of the first packet. In a possible implementation, the first device modifies the value of the response code field of the first packet to the fourth value, to obtain the reject packet. Therefore, after obtaining the reject packet, the second device may determine, based on the fourth value as the value of the response code field, that the first range lock fails to be obtained.

For example, the first device further modifies routing information in the first packet based on routing information of the second device, to obtain the second packet or the reject packet. Therefore, the first device can send the second packet to the second device based on routing information in the second packet, or the first device can send the reject packet to the second device based on routing information in the reject packet. The foregoing operation of modifying the value of the response code field may correspond to a data modification operation performed by the first device in FIG. 9, and an operation of sending the second packet by the first device to the second device and an operation of sending the reject packet by the first device to the second device may correspond to a result feedback operation performed by the first device in FIG. 9.

S706: The second device receives the second packet sent by the first device.

With reference to content in S702 to S705, it can be learned that the second packet is sent by the first device based on a case in which the interval of the first range lock does not intersect the interval of the second range lock corresponding to the type. A manner in which the second device obtains the second packet sent by the first device is not limited in this embodiment of this application, provided that this manner corresponds to the manner in which the first device sends the second packet to the second device. For example, if the first device sends the second packet to the second device through the wireless network, the second device receives the second packet through the wireless network.

S707: The second device obtains the first range lock based on the second packet.

For example, the second device parses the second packet, and obtains the first range lock based on the third value as the response code field of the second packet. The operation of obtaining, by the second device, the first range lock based on the second packet may correspond to a packet parsing operation performed by the second device in FIG. 9. For example, the method further includes: The second device receives the reject packet sent by the first device, and determines, based on the reject packet, that the first range lock fails to be obtained.

In a possible implementation, when sending the second packet to the second device or after sending the second packet to the second device, the first device locks, by using the first range lock, the data corresponding to the interval of the first range lock, so that after obtaining the first range lock, the second device may perform an operation on the locked data. For example, when the type of the first range lock is the shared range lock, the second device reads the locked data; or when the type of the first range lock is the exclusive range lock, the second device modifies the locked data.

Because the first device may store the multi-level search structure corresponding to the type of the first range lock, in a possible implementation, after the first device sends the second packet to the second device, the method further includes: The first device adds the first endpoint and the second endpoint to the multi-level search structure. For example, the first device sets values of positions of values at the first endpoint and the second endpoint in the multi-level search structure to the first reference value, and keeps a value of a position of a value at a middle point other than the first endpoint and the second endpoint in the interval of the first range lock unchanged.

For example, an example in which the first reference value is 1 is used. For the layer i in the multi-level search structure, a bit position at the layer i corresponds to positions of $X^{N-i}$ values. For a value representing the first endpoint, an identifier value of a bit position corresponding to the value is $\lfloor \frac{M1}{X^{Q-i}} \rfloor$, and the value of the bit position whose identifier value is $\lfloor \frac{M1}{X^{Q-i}} \rfloor$, is set to 1, where M1 represents the value of the first endpoint, and $\lfloor \frac{M1}{X^{Q-i}} \rfloor$ represents rounding down $\frac{M1}{X^{Q-i}}$ to the nearest integer. For a value representing the second endpoint, an identifier value of a bit position corresponding to the value is $\lfloor \frac{N1}{X^{Q-i}} \rfloor$, and the value of the bit position whose identifier value is $\lfloor \frac{N1}{X^{Q-i}} \rfloor$ is set to 1, where N1 represents the value of the second endpoint, and $\lfloor \frac{N1}{X^{Q-i}} \rfloor$ represents rounding down $\frac{N1}{X^{Q-i}}$ to the nearest integer.

In a possible implementation, after the second device obtains the first range lock, the method further includes: The second device sends a third packet to the first device, where the third packet is for requesting to release the first range lock, and the third packet includes the type and the interval that are of the first range lock. For example, after performing the operation on the data corresponding to the interval of the first range lock, the second device sends the third packet to the first device. A structure of the third packet is the same as the structure of the first packet. A value of an operation field of the third packet may be the second value, so that a type of the request of the third packet is for requesting to release the range lock.

Therefore, after receiving the third packet, the first device may release the first range lock based on the third packet. For example, when the interval of the first range lock includes the first endpoint and the second endpoint, after the adding the first endpoint and the second endpoint to the multi-level search structure, the method further includes: The first device obtains a third packet sent by the second device, where the third packet is for requesting to release the first range lock, and the third packet includes the type of the first range lock, the first endpoint, and the second endpoint. The first device obtains the multi-level search structure corresponding to the type of the first range lock. The first device deletes the first endpoint and the second endpoint from the multi-level search structure.

For example, deleting the first endpoint and the second endpoint is a process of setting bit positions corresponding to the values of the first endpoint and the second endpoint in the multi-level search structure to the second reference value. In this embodiment of this application, a deletion operation is performed layer by layer from the layer Q to the layer 1. For example, an example in which the second reference value is 0 is used. For the layer i, X bit positions at the layer i correspond to a bit position at the layer i-1, so that when values of the X bit positions at the layer i are all 0, values of bit positions at the layer i-1 corresponding to the X bit positions are set to 0.

For a value representing the first endpoint, an identifier value h1 of a bit position corresponding to the value at the layer i is $\lfloor \frac{M1}{X^{Q-i}} \rfloor$, and the value of the bit position with the identifier value h1 is set to 0, where $M1$ represents the value of the first endpoint, and $\lfloor \frac{M1}{X^{Q-i}} \rfloor$ represents rounding down $\frac{M1}{X^{Q-i}}$ to the nearest integer. If values of bit positions whose identifier values are $\lfloor \frac{h1}{X} \rfloor * X$ to $\lfloor \frac{h1}{X} \rfloor * X + (X-1)$ at the layer i are all 0, values of bit positions that are at the layer i-1 and that correspond to the bit positions $\lfloor \frac{h1}{X} \rfloor * X$ to $\lfloor \frac{h1}{X} \rfloor * X + (X-1)$ are set to 0; or if values of bit positions whose identifier values are $\lfloor \frac{h1}{X} \rfloor * X$ to $\lfloor \frac{h1}{X} \rfloor * X + (X-1)$ at the layer i are not all 0, values of bit positions that are at the layer i-1 and that correspond to the bit positions $\lfloor \frac{h1}{X} \rfloor * X$ to $\lfloor \frac{h1}{X} \rfloor * X + (X-1)$ remain unchanged. $\lfloor \frac{h1}{X} \rfloor$ represents rounding down $\frac{h1}{X}$ to the nearest integer.

For a value representing the second endpoint, an identifier value h2 of a bit position corresponding to the value at the layer i is $\lfloor \frac{N1}{X^{Q-i}} \rfloor$, and the value of the bit position with the identifier value h2 is set to 0, where $N1$ represents the value of the second endpoint, and $\lfloor \frac{N1}{X^{Q-i}} \rfloor$ represents rounding down $\frac{N1}{X^{Q-i}}$ to the nearest integer. If values of bit positions whose identifier values are $\lfloor \frac{h2}{X} \rfloor * X$ to $\lfloor \frac{h2}{X} \rfloor * X + (X-1)$ at the layer i are all 0, values of bit positions that are at the layer i-1 and that correspond to the bit positions $\lfloor \frac{h2}{X} \rfloor * X$ to $\lfloor \frac{h2}{X} \rfloor * X + (X-1)$ are set to 0; or if values of bit positions whose identifier values are $\lfloor \frac{h2}{X} \rfloor * X$ to $\lfloor \frac{h2}{X} \rfloor * X + (X-1)$ at the layer i are not all 0, values of bit positions that are at the layer i-1 and that correspond to the bit positions $\lfloor \frac{h2}{X} \rfloor * X$ to $\lfloor \frac{h2}{X} \rfloor * X + (X-1)$ remain unchanged. $\lfloor \frac{h2}{X} \rfloor$ represents rounding down $\frac{h2}{X}$ to the nearest integer.

The following describes a process of obtaining the range lock by using an example in which the method provided in embodiments of this application is applied to a distributed file system and a distributed database.

Example 1: The method is applied to the distributed file system, and the distributed file system includes at least one first device, a plurality of second devices, and a plurality of third devices. The first device is a switch, the second devices are clients, and the third devices are storage devices.

The plurality of third devices are configured to store a file in a distributed manner, in other words, a same file is stored in the plurality of third devices. The plurality of clients may simultaneously initiate a read request and/or a write request for the same file stored in the distributed manner. For example, the plurality of clients include a client 1 and a client 2, and a file 1 is stored in a plurality of storage devices in a distributed storage manner. The client 1 initiates a write operation on data [0, 4K] of the file 1, the client 2 initiates a write operation on data [3K, 6K] of the file 1, and the client 1 and the client 2 initiate the write operations at a same moment.

In this case, the client 1 sends a packet 1 to the switch, where the packet 1 is for requesting a range lock A, the packet 1 includes a type and an interval that are of the range lock A, and the range lock A is used to lock the data [0, 4K] of the file 1. In Example 1, the type of the range lock A is an exclusive range lock, and the interval is [0, 4K]. FIG. 13 is a diagram of another process of obtaining a range lock according to an embodiment of this application. As shown in FIG. 13, a client 1 sends a packet 1 to a switch. After obtaining the packet 1 sent by the client 1, the switch obtains a second range lock corresponding to an exclusive range lock, to determine whether an interval of a range lock A intersects an interval of the second range lock. Based on a case in which the interval of the range lock A does not intersect the interval of the second range lock, as shown in FIG. 13, the switch sends a packet 2 to the client 1, where the packet 2 indicates the client 1 to obtain the range lock A, so that the client 1 can obtain the range lock A based on the packet 2.

For example, as shown in FIG. 13, the client 2 sends a packet 3 to the switch, where the packet 3 is for requesting to obtain a range lock B, the packet 3 includes a type and an interval that are of the range lock B, and the range lock B is used to lock data [3K, 6K] of the file 1. In Example 1, the type of the range lock B is an exclusive range lock, the interval is [3K, 6K], and time at which the switch receives the packet 3 is later than time at which the switch receives the packet 1. After obtaining the packet 3 sent by the client 2, the switch obtains the second range lock corresponding to the exclusive range lock, to determine whether the interval of the range lock B intersects the interval of the second range lock.

In Example 1, when whether the interval of the range lock B intersects the interval of the second range lock is determined, the range lock A has been obtained, in other words, the second range lock includes the range lock A. Because the interval of the range lock A intersects the interval of the range lock B, the interval of the range lock B intersects the interval of the second range lock. In this case, refer to FIG. 13. The switch sends a packet 4 to the client 2, where the packet 4 is a reject packet, so that the client 2 can determine, based on the packet 4, that the range lock B fails to be obtained.

Example 2: The method is applied to the distributed database, and the distributed database includes at least one first device, a plurality of second devices, and a plurality of third devices. The first device is a switch, the second devices are clients, and the third devices are database servers.

The plurality of third devices are configured to store a table in a distributed manner, in other words, a same table is stored in the plurality of third devices. The plurality of clients may simultaneously initiate a read request and/or a write request for the same table stored in the distributed manner. An example in which the plurality of clients include a client 3 and a client 4, and Table 1 is stored in a plurality of database servers in a distributed storage manner. Table 1 includes a plurality of records. For any one of the plurality of records, the any one record includes an identifier (identifier, ID) corresponding to the any one record. The client 3 initiates an operation of modifying a record whose value of an identifier is greater than or equal to 3 in Table 1, and the client 4 initiates an operation of modifying a record whose value of an identifier is less than or equal to 2 in Table 1.

In this case, the client 3 sends a packet 5 to the switch, where the packet 5 is for requesting a range lock C, the packet 5 includes a type and an interval that are of the range lock C, and the range lock C is used to lock a record whose value of an identifier is greater than or equal to 3 in Table 1. In Example 2, the type of the range lock C is an exclusive range lock, and the interval is [3, R]. R represents a fourth reference value, the fourth reference value is less than 0, and [3, R] indicates that a start identifier value is 3 and an end identifier value is not limited. After obtaining the packet 5 sent by the client 3, the switch obtains a second range lock corresponding to an exclusive range lock, to determine whether an interval of a range lock C intersects an interval of the second range lock. Based on a case in which the interval of the range lock C does not intersect the interval of the second range lock, the switch sends a packet 6 to the client 3, where the packet 6 indicates the client 3 to obtain the range lock C, so that the client 3 can obtain the range lock C based on the packet 6.

The client 4 sends a packet 7 to the switch, where the packet 7 is for requesting a range lock D, the packet 7 includes a type and an interval that are of the range lock D, and the range lock D is used to lock a record whose value of an identifier is less than or equal to 2 in Table 1. In Example 2, the type of the range lock D is an exclusive range lock, the interval is [R, 2], and [R, 2] indicates that a start identifier value is not limited and an end identifier value is 2. After obtaining the packet 7 sent by the client 4, the switch obtains a second range lock corresponding to an exclusive range lock, to determine whether an interval of a range lock D intersects an interval of the second range lock. Based on a case in which the interval of the range lock D does not intersect the interval of the second range lock, the switch sends a packet 8 to the client 4, where the packet 8 indicates the client 4 to obtain the range lock D, so that the client 4 can obtain the range lock D based on the packet 8.

In the method provided in this embodiment of this application, after obtaining the packet for requesting the range lock, the first device directly obtains the range lock corresponding to the type of the range lock, to determine whether the intervals intersect, and does not need to traverse a fixed range lock in all the obtained range locks, so that efficiency of obtaining the range lock is high. When a quantity of second range locks is less than a quantity of all the obtained range locks, the quantity of second range locks used to determine whether the intervals intersect is small, so that efficiency of determining whether the intervals intersect is high, and efficiency of obtaining the first range lock is high.

When the first device is any one of a switch, a device including an FPGA, a device including a smart network interface card, or a device including a DPU, the first device has a linear processing capability, in other words, the first device has a deterministic processing delay. Regardless of a specific quantity of received packets for requesting range locks, time for the first device to process these packets is basically the same. In this embodiment of this application, that the time is basically the same means that a difference between duration does not exceed a reference threshold, and the reference threshold may be set based on experience or an actual requirement. Therefore, in a scenario of a large quantity of concurrent read-write operations, duration for which the first device performs the method provided in this embodiment of this application is stable, and does not increase rapidly as the quantity of concurrent read-write operations increases. The method is applicable to the scenario of the large quantity of concurrent read-write operations. When the duration for performing the method is short, a delay of obtaining the range lock is short, and efficiency is high.

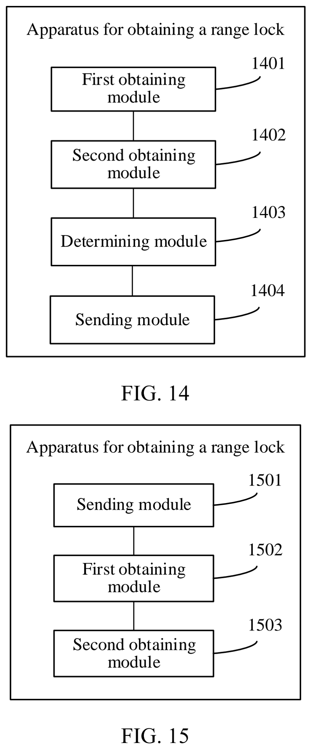

An embodiment of this application further provides an apparatus for obtaining a range lock. FIG. 14 is a diagram of a structure of an apparatus for obtaining a range lock according to an embodiment of this application. The apparatus is used in a first device. In other words, based on a plurality of modules shown in FIG. 14, the apparatus can perform all or some operations performed by the first device. It should be understood that the apparatus may include more additional modules than the shown modules or omit some of the shown modules. This is not limited in this embodiment of this application. As shown in FIG. 14, the apparatus includes a first obtaining module 1401, a second obtaining module 1402, a determining module 1403, and a sending module 1404.

The first obtaining module 1401 is configured to obtain a first packet sent by a second device, where the first packet is for requesting to obtain a first range lock, the first packet includes a type and an interval that are of the first range lock, and the first range lock is used to lock data stored in a distributed manner. The second obtaining module 1402 is configured to obtain a second range lock corresponding to the type of the first range lock. The determining module 1403 is configured to determine whether the interval of the first range lock intersects an interval of the second range lock. The sending module 1404 is configured to send a second packet to the second device based on a case in which the interval of the first range lock does not intersect the interval of the second range lock, where the second packet indicates the second device to obtain the first range lock.

In a possible implementation, the interval of the first range lock includes a first endpoint and a second endpoint, and the first endpoint, the second endpoint, and endpoints included in the interval of the second range lock are represented by using values. The determining module 1403 is configured to: obtain a first neighboring point and a second neighboring point of the first endpoint from the endpoints included in the interval of the second range lock, where the first neighboring point is an endpoint with a largest value in at least one first reference endpoint, a value of the first reference endpoint is less than the value of the first endpoint, the second neighboring point is an endpoint with a smallest value in at least one second reference endpoint, and a value of the second reference endpoint is greater than the value of the first endpoint; and determine, based on the first neighboring point, the second neighboring point, and the second endpoint, whether the interval of the first range lock intersects the interval of the second range lock.

In a possible implementation, there are a plurality of second range locks. When the value of the second endpoint is greater than the value of the first endpoint, based on a case in which the first neighboring point is a fourth endpoint included in an interval of a second range lock, the second neighboring point is a fifth endpoint included in an interval of another second range lock, the value of the second endpoint is less than the value of the second neighboring point, and the interval of the first range lock is not included in an interval of any one of the plurality of second range locks, the determining module 1403 is configured to determine that the interval of the first range lock does not intersect intervals of the plurality of second range locks, where the interval including the fourth endpoint further includes a third endpoint, a value of the third endpoint is less than a value of the fourth endpoint, the interval including the fifth endpoint further includes a sixth endpoint, and a value of the fifth endpoint is less than a value of the sixth endpoint.

In a possible implementation, there are a plurality of second range locks. When the value of the second endpoint is less than the value of the first endpoint, based on a case in which the first neighboring point is a fourth endpoint included in an interval of a second range lock, the second neighboring point is a fifth endpoint included in an interval of another second range lock, the value of the second endpoint is greater than the value of the first neighboring point, and the interval of the first range lock is not included in an interval of any one of the plurality of second range locks, the determining module 1403 is configured to determine that the interval of the first range lock does not intersect intervals of the plurality of second range locks, where the interval including the fourth endpoint further includes a third endpoint, a value of the third endpoint is less than a value of the fourth endpoint, the interval including the fifth endpoint further includes a sixth endpoint, and a value of the fifth endpoint is less than a value of the sixth endpoint.

In a possible implementation, the first device stores a multi-level search structure corresponding to the type, and the endpoints included in the interval of the second range lock are stored in the multi-level search structure. The determining module 1403 is configured to search the multi-level search structure, to obtain the first neighboring point and the second neighboring point of the first endpoint.

In a possible implementation, the determining module 1403 is further configured to add the first endpoint and the second endpoint to the multi-level search structure.

In a possible implementation, the first obtaining module 1401 is further configured to obtain a third packet sent by the second device, where the third packet is for requesting to release the first range lock, and the third packet includes the type of the first range lock, the first endpoint, and the second endpoint. The determining module 1403 is further configured to: obtain the multi-level search structure corresponding to the type; and delete the first endpoint and the second endpoint from the multi-level search structure.

In a possible implementation, based on a case in which the first range lock is a range lock whose interval allows intersection, the second range lock includes a range lock whose interval does not allow intersection and that is already obtained before the first range lock; or based on a case in which the first range lock is a range lock whose interval does not allow intersection, the second range lock includes all range locks that are already obtained before the first range lock.

In a possible implementation, the first device is any one of a switch, a server, a device including an FPGA, a device including a smart network interface card, or a device including a DPU, and the second device is a client.

In the apparatus provided in this embodiment of this application, after the packet for requesting the range lock is obtained, the range lock corresponding to the type of the range lock is directly obtained, to determine whether the intervals intersect, and there is no need to traverse a fixed range lock in all obtained range locks, so that efficiency of obtaining the range lock is high. When a quantity of second range locks is less than a quantity of all the obtained range locks, the quantity of second range locks used to determine whether the intervals intersect is small, so that efficiency of determining whether the intervals intersect is high, and efficiency of obtaining the first range lock is high.

FIG. 15 is a diagram of a structure of another apparatus for obtaining a range lock according to an embodiment of this application. The apparatus is used in a second device. In other words, based on a plurality of modules shown in FIG. 15, the apparatus can perform all or some operations performed by the second device. It should be understood that the apparatus may include more additional modules than the shown modules or omit some of the shown modules. This is not limited in this embodiment of this application. As shown in FIG. 15, the apparatus includes a sending module 1501, a first obtaining module 1502, and a second obtaining module 1503.

The sending module 1501 is configured to send a first packet to a first device, where the first packet is for requesting to obtain a first range lock, the first packet includes a type and an interval that are of the first range lock, and the first range lock is used to lock data stored in a distributed manner. The first obtaining module 1502 is configured to receive a second packet sent by the first device, where the second packet is sent by the first device based on a case in which the interval of the first range lock does not intersect an interval of a second range lock corresponding to the type. The second obtaining module 1503 is configured to obtain the first range lock based on the second packet.

In a possible implementation, the sending module 1501 is further configured to send a third packet to the first device, where the third packet is for requesting to release the first range lock, and the third packet includes the type and the interval that are of the first range lock.

In a possible implementation, based on a case in which the first range lock is a range lock whose interval allows intersection, the second range lock includes a range lock whose interval does not allow intersection and that is already obtained before the first range lock; or based on a case in which the first range lock is a range lock whose interval does not allow intersection, the second range lock includes all range locks that are already obtained before the first range lock.

In a possible implementation, the first device is any one of a switch, a server, a device including an FPGA, a device including a smart network interface card, or a device including a DPU, and the second device is a client.

In the apparatus provided in this embodiment of this application, after obtaining the packet for requesting the range lock, the first device directly obtains the range lock corresponding to the type of the range lock, to determine whether the intervals intersect, and does not need to traverse a fixed range lock in all the obtained range locks, so that efficiency of determining whether the intervals intersect is high. In this case, time from sending the first packet to receiving the second packet is short, and efficiency of obtaining the range lock is high.

It should be understood that, when the apparatuses provided in FIG. 14 and FIG. 15 implement functions of the apparatuses, division into the foregoing functional modules is merely used as an example for description. During actual application, the foregoing functions may be allocated to different functional modules for implementation based on a requirement. In other words, an inner structure of a device is divided into different functional modules, to implement all or some of the functions described above. In addition, the apparatuses provided in the foregoing embodiment and the method embodiments belong to a same concept. For a specific implementation process thereof, refer to the method embodiments. Details are not described herein again.

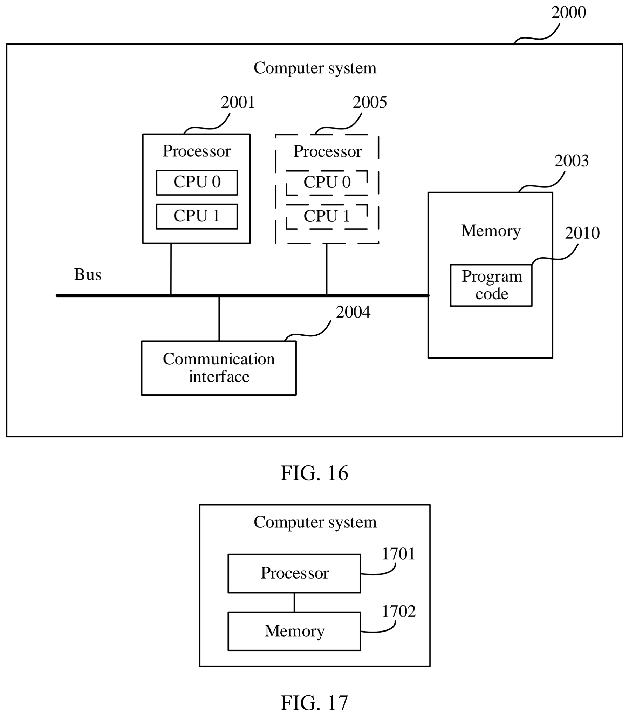

FIG. 16 is a diagram of a structure of a computer system according to an embodiment of this application. For example, as shown in FIG. 16, the computer system is a computer system 2000. The computer system 2000 may be a network device, a routing device, or a switching device. The computer system 2000 shown in FIG. 16 is configured to perform operations related to a first device or operations related to a second device in the method for obtaining a range lock shown in FIG. 7. The computer system 2000 is, for example, a server, and the computer system 2000 may be implemented by using a general bus architecture.

As shown in FIG. 16, the computer system 2000 includes at least one processor 2001, a memory 2003, and at least one communication interface 2004.

The processor 2001 is, for example, a central processing unit (central processing unit, CPU), a digital signal processor (digital signal processor, DSP), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits configured to implement the solutions of this application. For example, the processor 2001 includes an application-specific integrated circuit (application-specific Integrated Circuit, ASIC), a programmable logic device (programmable Logic Device, PLD) or another programmable logic device, a transistor logic device, a hardware component, or any combination thereof. The PLD is, for example, a complex programmable logic device (complex programmable logic device, CPLD), a field-programmable gate array (field-programmable gate array, FPGA), a generic array logic (generic array logic, GAL), or any combination thereof. The processor may implement or execute various logical blocks, modules, and circuits described with reference to the content disclosed in embodiments of this application. Alternatively, the processor may be a combination of processors implementing a computing function, for example, a combination of one or more microprocessors, or a combination of the DSP and the microprocessor.

Optionally, the computer system 2000 further includes a bus. The bus is configured to perform transmission of information between components of the computer system 2000. The bus may be a peripheral component interconnect (peripheral component interconnect, PCI) bus or an extended industry standard architecture (extended industry standard architecture, EISA) bus, or the like. The bus may be classified into an address bus, a data bus, a control bus, and the like. For ease of representation, only one bold line is used to represent the bus in FIG. 16, but this does not mean that there is only one bus or only one type of bus.

The memory 2003 is, for example, a read-only memory (read-only memory, ROM) or another type of static storage device that can store static information and instructions, or a random access memory (random access memory, RAM) or another type of dynamic storage device that can store information and instructions, or an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Bluray disc, and the like), a magnetic disk storage medium or another magnetic storage device, or any other medium that can be used to carry or store expected program code in a form of instructions or a data structure and that can be accessed by a computer, but is not limited thereto. For example, the memory 2003 exists independently, and is connected to the processor 2001 through the bus. Alternatively, the memory 2003 and the processor 2001 may be integrated together.

The communication interface 2004 is any apparatus such as a transceiver, and is configured to communicate with another device or a communication network. The communication network may be an Ethernet, a radio access network (radio access network, RAN), a wireless local area network (wireless local area network, WLAN), or the like. The communication interface 2004 includes a wired communication interface, and may further include a wireless communication interface. Specifically, the communication interface 2004 may be an Ethernet (Ethernet) interface, a fast Ethernet (fast Ethernet, FE) interface, a gigabit Ethernet (gigabit Ethernet, GE) interface, an asynchronous transfer mode (asynchronous transfer mode, ATM) interface, a WLAN interface, a cellular network communication interface, or a combination thereof. The Ethernet interface may be an optical interface, an electrical interface, or a combination thereof. In this embodiment of this application, the communication interface 2004 may be used by the computer system 2000 to communicate with another device.

During specific implementation, in an embodiment, the processor 2001 may include one or more CPUs, such as a CPU 0 and a CPU 1 shown in FIG. 16. Each of these processors may be a single-core processor (single-CPU), or may be a multi-core processor (multi-CPU). The processor herein may be one or more devices, circuits, and/or processing cores configured to process data (for example, computer program instructions).

During specific implementation, in an embodiment, the computer system 2000 may include a plurality of processors, such as a processor 2001 and a processor 2005 shown in FIG. 16. Each of these processors may be a single-core processor (single-CPU) or may be a multi-core processor (multi-CPU). The processor herein may be one or more devices, circuits, and/or processing cores configured to process data (for example, computer program instructions).

During specific implementation, in an embodiment, the computer system 2000 may further include an output device and an input device. The output device communicates with the processor 2001, and may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector (projector). The input device communicates with the processor 2001, and may receive an input of a user in a plurality of manners. For example, the input device may be a mouse, a keyboard, a touchscreen device, or a sensing device.

In some embodiments, the memory 2003 is configured to store program code 2010 for performing the solutions of this application, and the processor 2001 can execute the program code 2010 stored in the memory 2003. The program code 2010 may include one or more software modules. Optionally, the processor 2001 may alternatively store program code or instructions for executing the solutions of this application.

In a specific embodiment, the computer system 2000 in this embodiment of this application may be the first device in the foregoing method embodiments. The processor 2001 in the computer system 2000 reads the program code 2010 in the memory 2003 or program codes or instructions stored in the processor 2001, to enable the computer system 2000 shown in FIG. 16 to perform all or some operations performed by the first device.

In a specific embodiment, the computer system 2000 in this embodiment of this application may be the second device in the foregoing method embodiments. The processor 2001 in the computer system 2000 reads the program code 2010 in the memory 2003 or program codes or instructions stored in the processor 2001, to enable the computer system 2000 shown in FIG. 16 to perform all or some operations performed by the second device.

The computer system 2000 may further correspond to the apparatuses shown in FIG. 14 and FIG. 15. Each functional module in the apparatuses shown in FIG. 14 and FIG. 15 is implemented by using software of the computer system 2000. In other words, the functional module included in the apparatuses shown in FIG. 14 and FIG. 15 is generated after the processor 2001 of the computer system 2000 reads the program code 2010 stored in the memory 2003.

Steps in the method for obtaining a range lock shown in FIG. 7 are completed by using an integrated logic circuit of hardware in the processor of the computer system 2000 or instructions in a form of software. Steps in the methods disclosed with reference to embodiments of this application may be directly performed and completed by a hardware processor, or may be performed and completed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory, and completes the steps in the foregoing methods in combination with the hardware in the processor. To avoid repetition, details are not described herein again.

FIG. 17 is a diagram of a structure of another computer system according to an embodiment of this application. The computer system is configured to perform operations related to a first device or operations related to a second device in the method for obtaining a range lock shown in FIG. 7. For example, the computer system is a server. The server may vary greatly due to different configurations or performance. The computer system may include one or more processors 1701 and one or more memories 1702. The one or more memories 1702 store at least one computer program, and the at least one computer program is loaded and executed by the one or more processors 1701. For example, the processor 1701 is a CPU. Certainly, the computer system may further include components such as a wired or wireless network interface, a keyboard, and an input/output interface, to perform input/output. The computer system may further include another component configured to implement a device function. Details are not described herein.

An embodiment of this application further provides a computer system. The computer system includes a processor. When the processor executes program instructions or code, the computer system performs a method for obtaining a range lock performed by a first device, or a method for obtaining a range lock performed by a second device. For example, the computer system further includes a memory, and the memory is configured to store the program instructions or the code.

In a possible implementation, the computer system further includes an input interface and an output interface. The input interface, the output interface, the processor, and the memory are connected to each other through an internal connection path.

An embodiment of this application further provides a system for obtaining a range lock. The system includes a first device and a second device. The first device is configured to perform the method performed by the first device shown in FIG. 7, and the second device is configured to perform the method performed by the second device shown in FIG. 7. For respective functions of the first device and the second device in the system, refer to related descriptions shown in FIG. 7. Details are not described herein one by one again.

An embodiment of this application further provides a communication apparatus. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. In addition, when the processor executes the instructions stored in the memory, the processor is enabled to perform any method for obtaining a range lock in the first aspect or any method for obtaining a range lock in the second aspect.

It should be understood that the processor may be a CPU, or may be another general-purpose processor, a DSP, an ASIC, an FPGA or another programmable logic device, a discrete gate or a transistor logic device, a discrete hardware component, or the like. The general-purpose processor may be a microprocessor, any conventional processor, or the like. It should be noted that the processor may be a processor that supports an advanced reduced instruction set computer machines (advanced RISC machines, ARM) architecture.

Further, in an optional embodiment, the memory may include a read-only memory and a random access memory, and provide instructions and data for the processor. The memory may further include a nonvolatile random access memory. For example, the memory may further store information about a device type.

The memory may be a volatile memory or a nonvolatile memory, or may include both the volatile memory and the nonvolatile memory. The nonvolatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and is used as an external cache. By way of example, and not limitation, many forms of RAMs may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a computer-readable storage medium. The computer-readable storage medium stores at least one program instruction or code. When the program instruction or the code is loaded and executed by a processor, a computer is enabled to implement the method for obtaining a range lock performed by the first device or the method for obtaining a range lock performed by the second device in the method embodiments.

An embodiment of this application further provides a computer program or a computer program product. The computer program or the computer program product includes computer program code. When the computer program code is run by a computer, the computer is enabled to perform the method for obtaining a range lock performed by the first device or the method for obtaining a range lock performed by the second device in the method embodiments.

An embodiment of this application further provides a chip, including: a processor, configured to: invoke, from a memory, instructions stored in the memory and run the instructions. When the chip is installed on a first device, the first device performs the method for obtaining a range lock performed by the first device in the method embodiments. When the chip is installed on a second device, the second device performs the method for obtaining a range lock performed by the second device in the method embodiments.

For example, the chip further includes: an input interface, an output interface, and the memory. The input interface, the output interface, the processor, and the memory are connected to each other through an internal connection path, and the memory includes the foregoing program instructions or code.

All or some of the foregoing embodiments may be implemented by software, hardware, firmware, or any combination thereof. When software is used to implement the embodiments, the embodiments may be completely or partially implemented in a form of a computer program or a computer program product. The computer program or the computer program product includes one or more computer instructions. When the computer program instructions are loaded and executed on a computer, the procedure or functions according to this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), or a semiconductor medium (for example, a solid-state drive (solid-state drive, SSD)), or the like.

To clearly describe the interchangeability of hardware and software, the steps and composition of embodiments have been generally described in the foregoing descriptions based on functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

Computer program code used to implement the methods in embodiments of this application may be written in one or more programming languages. The computer program code may be provided for a processor of a general-purpose computer, a dedicated computer, or another programmable apparatus for obtaining a range lock, so that when the program code is executed by the computer or the another programmable apparatus for obtaining a range lock, functions/operations specified in the flowcharts and/or block diagrams are implemented. The program code may be executed completely on the computer, partially on the computer, as an independent software package, partially on the computer and partially on a remote computer, or completely on the remote computer or server.

In the context of embodiments of this application, the computer program code or related data may be carried in any appropriate carrier, so that the device, the apparatus, or the processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

It may be clearly understood by a person skilled in the art that, for the purpose of convenient and brief description, for a detailed working process of the foregoing system, device, and module, refer to a corresponding process in the foregoing method embodiment. Details are not described herein.

In the several embodiments provided in this application, it should be understood that the disclosed system, device, and method may be implemented in other manners. For example, the described device embodiment is merely an example. For example, module division is merely logical function division and may be other division during actual implementation. For example, a plurality of modules or components may be combined or integrated into another system, or some features may be ignored or not performed. In addition, the displayed or discussed mutual couplings or direct couplings or communication connections may be indirect couplings or communication connections implemented through some interfaces, devices, or modules, or may be electrical, mechanical, or other forms of connections.

The modules described as separate components may or may not be physically separate, and components displayed as modules may or may not be physical modules, may be located in one position, or may be distributed on a plurality of network modules. Some or all of the modules may be selected based on an actual requirement to achieve the objectives of the solutions of embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

In this application, terms such as "first" and "second" are used to distinguish between same items or similar items that have basically same functions. It should be understood that there is no logical or time sequence dependency between "first", "second", and "$n^{th}$", and a quantity and an execution sequence are not limited. It should be further understood that although the terms such as "first" and "second" are used in the following descriptions to describe various elements, these elements should not be limited by the terms. These terms are merely used to distinguish one element from another element. For example, without departing from a scope of the various examples, the first device may be referred to as the second device, and similarly, the second device may be referred to as the first device.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

The term "at least one" in this application means one or more, and the term "a plurality of" in this application means two or more. For example, a plurality of range locks means two or more range locks. The terms "system" and "network" are often used interchangeably in this specification.

It should be understood that the terms used in the descriptions of various examples in this specification are merely intended to describe specific examples but are not intended to constitute a limitation. The terms "one" ("a" and "an") and "the" of singular forms used in the descriptions of the various examples and the appended claims are also intended to include plural forms, unless otherwise specified in the context clearly.

It should be further understood that when being used in this specification, the term "include" (also referred to as "includes", "including", "comprises", and/or "comprising") specifies presence of stated features, integers, steps, operations, elements, and/or components, but does not preclude presence or addition of one or more other features, integers, steps, operations, elements, components, and/or groups thereof.

It should be further understood that, depending on the context, the phrase "if it is determined ..." or "if [a stated condition or event] is detected" may be interpreted as a meaning of "when it is determined that", "in response to determining", "when [a stated condition or event] is detected", or "in response to detecting [a stated condition or event]".

It should be understood that determining B based on A does not mean that B is determined based only on A, and B may alternatively be determined based on A and/or other information.

It should be further understood that "one embodiment", "an embodiment", or "a possible implementation" mentioned throughout this specification means that particular features, structures, or characteristics related to the embodiments or implementations are included in at least one embodiment of this application. Therefore, "in one embodiment", "in an embodiment", or "in a possible implementation" appearing throughout this specification does not necessarily mean a same embodiment. In addition, these particular features, structures, or characteristics may be combined in one or more embodiments in any appropriate manner.

The foregoing descriptions are merely optional embodiments of this application, but are not intended to limit this application. Any modification, equivalent replacement, or improvement made without departing from the principle of this application should fall within the protection scope of this application.

**Claims**

1. A method for obtaining a range lock, wherein the method comprises:

   obtaining, by a first device, a first packet sent by a second device, wherein the first packet is for requesting to obtain a first range lock, the first packet comprises a type and an interval that are of the first range lock, and the first range lock is used to lock data stored in a distributed manner;
   obtaining, by the first device, a second range lock corresponding to the type of the first range lock;
   determining, by the first device, whether the interval of the first range lock intersects an interval of the second range lock; and
   sending, by the first device, a second packet to the second device based on a case in which the interval of the first range lock does not intersect the interval of the second range lock, wherein the second packet indicates the second device to obtain the first range lock.

2. The method according to claim 1, wherein the interval of the first range lock comprises a first endpoint and a second endpoint, and the first endpoint, the second endpoint, and endpoints comprised in the interval of the second range lock are represented by using values; and the determining whether the interval of the first range lock intersects an interval of the second range lock comprises:

   obtaining a first neighboring point and a second neighboring point of the first endpoint from the endpoints comprised in the interval of the second range lock, wherein the first neighboring point is an endpoint with a largest value in at least one first reference endpoint, a value of the first reference endpoint is less than the value of the first endpoint, the second neighboring point is an endpoint with a smallest value in at least one second reference endpoint, and a value of the second reference endpoint is greater than the value of the first endpoint; and
   determining, based on the first neighboring point, the second neighboring point, and the second endpoint, whether the interval of the first range lock intersects the interval of the second range lock.

3. The method according to claim 2, wherein there are a plurality of second range locks, and the determining, based on the first neighboring point, the second neighboring point, and the second endpoint, whether the interval of the first range lock intersects the interval of the second range lock comprises:

   when the value of the second endpoint is greater than the value of the first endpoint, based on a case in which the first neighboring point is a fourth endpoint comprised in an interval of a second range lock, the second neighboring point is a fifth endpoint comprised in an interval of another second range lock, the value of the second endpoint is less than the value of the second neighboring point, and the interval of the first range lock is not comprised in an interval of any one of the plurality of second range locks, determining that the interval of the first range lock does not intersect intervals of the plurality of second range locks, wherein the interval comprising the fourth endpoint further comprises a third endpoint, a value of the third endpoint is less than a value of the fourth endpoint, the interval comprising the fifth endpoint further comprises a sixth endpoint, and a value of the fifth endpoint is less than a value of the sixth endpoint.

4. The method according to claim 2, wherein there are a plurality of second range locks, and the determining, based on the first neighboring point, the second neighboring point, and the second endpoint, whether the interval of the first range lock intersects the interval of the second range lock comprises:

   when the value of the second endpoint is less than the value of the first endpoint, based on a case in which the first neighboring point is a fourth endpoint comprised in an interval of a second range lock, the second neighboring point is a fifth endpoint comprised in an interval of another second range lock, the value of the second endpoint is greater than the value of the first neighboring point, and the interval of the first range lock is not comprised in an interval of any one of the plurality of second range locks, determining that the interval of the first range lock does not intersect intervals of the plurality of second range locks, wherein

the interval comprising the fourth endpoint further comprises a third endpoint, a value of the third endpoint is less than a value of the fourth endpoint, the interval comprising the fifth endpoint further comprises a sixth endpoint, and a value of the fifth endpoint is less than a value of the sixth endpoint.

5. The method according to any one of claims 2 to 4, wherein the first device stores a multi-level search structure corresponding to the type, and the endpoints comprised in the interval of the second range lock are stored in the multi-level search structure; and

the obtaining a first neighboring point and a second neighboring point of the first endpoint from the endpoints comprised in the interval of the second range lock comprises:

searching the multi-level search structure, to obtain the first neighboring point and the second neighboring point of the first endpoint.

6. The method according to claim 5, wherein after the sending a second packet to the second device, the method further comprises:
adding, by the first device, the first endpoint and the second endpoint to the multi-level search structure.

7. The method according to claim 6, wherein after the adding the first endpoint and the second endpoint to the multi-level search structure, the method further comprises:

obtaining, by the first device, a third packet sent by the second device, wherein the third packet is for requesting to release the first range lock, and the third packet comprises the type of the first range lock, the first endpoint, and the second endpoint;
obtaining, by the first device, the multi-level search structure corresponding to the type; and
deleting, by the first device, the first endpoint and the second endpoint from the multi-level search structure.

8. The method according to any one of claims 1 to 7, wherein based on a case in which the first range lock is a range lock whose interval allows intersection, the second range lock comprises a range lock whose interval does not allow intersection and that is already obtained before the first range lock; or
based on a case in which the first range lock is a range lock whose interval does not allow intersection, the second range lock comprises all range locks that are already obtained before the first range lock.

9. The method according to any one of claims 1 to 8, wherein the first device is any one of a switch, a server, a device comprising a field-programmable gate array, a device comprising a smart network interface card, or a device comprising a data processing unit, and the second device is a client.

10. A method for obtaining a range lock, wherein the method comprises:

sending, by a second device, a first packet to a first device, wherein the first packet is for requesting to obtain a first range lock, the first packet comprises a type and an interval that are of the first range lock, and the first range lock is used to lock data stored in a distributed manner;
receiving, by the second device, a second packet sent by the first device, wherein the second packet is sent by the first device based on a case in which the interval of the first range lock does not intersect an interval of a second range lock corresponding to the type; and
obtaining, by the second device, the first range lock based on the second packet.

11. The method according to claim 10, wherein after the obtaining the first range lock, the method further comprises:
sending, by the second device, a third packet to the first device, wherein the third packet is for requesting to release the first range lock, and the third packet comprises the type and the interval that are of the first range lock.

12. The method according to claim 10 or 11, wherein based on a case in which the first range lock is a range lock whose interval allows intersection, the second range lock comprises a range lock whose interval does not allow intersection and that is already obtained before the first range lock; or
based on a case in which the first range lock is a range lock whose interval does not allow intersection, the second range lock comprises all range locks that are already obtained before the first range lock.

13. The method according to any one of claims 10 to 12, wherein the first device is any one of a switch, a server, a device comprising a field-programmable gate array, a device comprising a smart network interface card, or a device comprising a data processing unit, and the second device is a client.

**14.** An apparatus for obtaining a range lock, wherein the apparatus is used in a first device, and the apparatus comprises:

a first obtaining module, configured to obtain a first packet sent by a second device, wherein the first packet is for requesting to obtain a first range lock, the first packet comprises a type and an interval that are of the first range lock, and the first range lock is used to lock data stored in a distributed manner;
a second obtaining module, configured to obtain a second range lock corresponding to the type of the first range lock;
a determining module, configured to determine whether the interval of the first range lock intersects an interval of the second range lock; and
a sending module, configured to send a second packet to the second device based on a case in which the interval of the first range lock does not intersect the interval of the second range lock, wherein the second packet indicates the second device to obtain the first range lock.

**15.** An apparatus for obtaining a range lock, wherein the apparatus is used in a second device, and the apparatus comprises:

a sending module, configured to send a first packet to a first device, wherein the first packet is for requesting to obtain a first range lock, the first packet comprises a type and an interval that are of the first range lock, and the first range lock is used to lock data stored in a distributed manner;
a first obtaining module, configured to receive a second packet sent by the first device, wherein the second packet is sent by the first device based on a case in which the interval of the first range lock does not intersect an interval of a second range lock corresponding to the type; and
a second obtaining module, configured to obtain the first range lock based on the second packet.

**16.** A system for obtaining a range lock, wherein the system comprises a first device and a second device, the first device is configured to perform the method according to any one of claims 1 to 9, and the second device is configured to perform the method according to any one of claims 10 to 13.

**17.** A computer system, wherein the computer system comprises a processor, and when the processor executes program instructions or code, the computer system implements the method according to any one of claims 1 to 13.

**18.** The computer system according to claim 17, wherein the computer system further comprises a memory, and the memory is configured to store the program instructions or the code.

**19.** A computer-readable storage medium, wherein the computer-readable storage medium stores at least one program instruction or code, and when the program instruction or the code is loaded and executed by a processor, a computer is enabled to implement the method according to any one of claims 1 to 13.

**20.** A chip, wherein the chip comprises a processor, the processor is configured to: invoke, from a memory, instructions stored in the memory and run the instructions, and when the chip is installed on a first device, the first device performs the method according to any one of claims 1 to 9, or when the chip is installed on a second device, the second device performs the method according to any one of claims 10 to 13.

Client 1          Client 2                    Client 3

File 1

[0, 4K]           [9K, 60M]                   [70M, 100M]

FIG. 1

[50, 70]
Exclusive range
lock

[30, 47]
Exclusive range
lock

[81, 83]
Exclusive range
lock

[10, 26]
Shared range
lock

[48, 49]
Exclusive range
lock

[71, 79]
Shared range
lock

[94, 99]
Exclusive range
lock

FIG. 2

Client

Network lock
system

Lock manager

Lock table

Route          Lock table

Top of rack switch

Lock manager

Lock table

Database server          Database server

FIG. 3

102          101

Second device ↔ First device

FIG. 4

102          101

Second device ↔ First device

103          103          103

Storage device ↔ Storage device ↔ Storage device

FIG. 5

102          101

Second device ↔ First device

104          104          104

Database server ↔ Database server ↔ Database server

FIG. 6

| Second device | | First device |
|---|---|---|

S701: Send a first packet to the first device, where the first packet is for requesting to obtain a first range lock, the first packet includes a type and an interval that are of the first range lock, and the first range lock is used to lock data stored in a distributed manner

S702: Obtain the first packet sent by the second device

S703: Obtain a second range lock corresponding to the type of the first range lock

S704: Determine whether the interval of the first range lock intersects an interval of the second range lock

S705: The first device sends a second packet to the second device based on a case in which the interval of the first range lock does not intersect the interval of the second range lock, where the second packet indicates the second device to obtain the first range lock

S706: Receive the second packet sent by the first device

S707: Obtain the first range lock based on the second packet

FIG. 7

| Communication protocol header | Operation field | Response code field | Lock type field | Client identifier field | Start field | End field |
|---|---|---|---|---|---|---|

FIG. 8

Second device

| Packet generation |

| Packet parsing |

First device

| Packet identification |

| Neighbor search |

| Condition decision |

| Data modification |

| Result feedback |

FIG. 9

Range lock 1    Range lock 2    Range lock 3

L1    M    R1    L2    N    R2

FIG. 10

Layer 1

| 1 | 0 | 0 | 0 | ... | 0 |
| 0 | 1 | 2 | 3 | ... | 31 |

Layer 2

| 1 | 0 | 0 | 0 | ... | 1 | ... | 0 | 0 | 0 | 0 | ... | 0 |
| 0 | 1 | 2 | 3 | ... | 31 | | 992 | 993 | 994 | 995 | ... | 1023 |

Layer 3

| 1 | 0 | 0 | 0 | ... | 0 | ... | 0 | 0 | 0 | 0 | ... | 1 | ... |
| 0 | 1 | 2 | 3 | ... | 31 | | 992 | 993 | 994 | 995 | ... | 1023 | |

FIG. 11

(a)

(b)

(c)

(d)

(e)

FIG. 12

Client 1

Send a
packet 1

Send a
packet 2

Switch

Send a
packet 3

Send a
packet 4

Client 2

FIG. 13

Apparatus for obtaining a range lock

First obtaining module — 1401

Second obtaining module — 1402

Determining module — 1403

Sending module — 1404

FIG. 14

Apparatus for obtaining a range lock

Sending module — 1501

First obtaining module — 1502

Second obtaining module — 1503

FIG. 15

2000

Computer system

2001

2005

Processor

2003

CPU 0

CPU 1

Processor

CPU 0

CPU 1

Memory

2010

Program
code

Bus

2004

Communication
interface

FIG. 16

Computer system

Processor

1701

Memory

1702

FIG. 17

## INTERNATIONAL SEARCH REPORT

| | International application No. |
|---|---|
| | **PCT/CN2024/091400** |

| A. | CLASSIFICATION OF SUBJECT MATTER |
|---|---|

G06F 16/176(2019.01)i

According to International Patent Classification (IPC) or to both national classification and IPC

| B. | FIELDS SEARCHED |
|---|---|

Minimum documentation searched (classification system followed by classification symbols)

    IPC: G06F

Documentation searched other than minimum documentation to the extent that such documents are included in the fields searched

Electronic data base consulted during the international search (name of data base and, where practicable, search terms used)

    VEN, CNTXT, WOTXT, EPTXT, USTXT, CNKI, IEEE: 段, 范围, 范围锁, 共享, 间隙锁, 交叉, 交叠, 类型, 排他, 独占, 区间, 相交, 种类, 重叠, lock, range, type, shar, exclusive, cross, overlap, intersection

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 104391935 A (HUAWEI TECHNOLOGIES CO., LTD.) 04 March 2015 (2015-03-04) description, paragraph [0002] and [0046]-[0092] | 1-20 |
| A | CN 110968563 A (HUAWEI TECHNOLOGIES CO., LTD.) 07 April 2020 (2020-04-07) entire document | 1-20 |
| A | CN 115951844 A (INSPUR ELECTRONIC INFORMATION INDUSTRY CO., LTD.) 11 April 2023 (2023-04-11) entire document | 1-20 |
| A | US 2020265091 A1 (ORACLE INTERNATIONAL CORP.) 20 August 2020 (2020-08-20) entire document | 1-20 |
| A | US 5761659 A (SUN MICROSYSTEMS, INC.) 02 June 1998 (1998-06-02) entire document | 1-20 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 July 2024** | **31 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/091400**

| Patent document cited in search report | | | Publication date (day/month/year) | Patent family member(s) | | | Publication date (day/month/year) |
|---|---|---|---|---|---|---|---|
| CN | 104391935 | A | 04 March 2015 | None | | | |
| CN | 110968563 | A | 07 April 2020 | WO | 2020063373 | A1 | 02 April 2020 |
| | | | | EP | 3848814 | A1 | 14 July 2021 |
| | | | | EP | 3848814 | A4 | 20 October 2021 |
| | | | | US | 2021216523 | A1 | 15 July 2021 |
| CN | 115951844 | A | 11 April 2023 | None | | | |
| US | 2020265091 | A1 | 20 August 2020 | US | 11636152 | B2 | 25 April 2023 |
| | | | | US | 2023252081 | A1 | 10 August 2023 |
| US | 5761659 | A | 02 June 1998 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310626935X